(19) **Europäisches Patentamt European Patent Office Office européen des brevets**

(11) **EP 1 715 753 B1**

(12) **EUROPEAN PATENT SPECIFICATION**

(45) Date of publication and mention of the grant of the patent:
**22.07.2009 Bulletin 2009/30**

(51) Int Cl.:
*A23J 1/12* (2006.01)       *A23J 3/14* (2006.01)
*A23J 3/34* (2006.01)       *A23K 1/16* (2006.01)
*A23L 1/10* (2006.01)       *A23L 1/105* (2006.01)

(21) Application number: **05723341.3**

(22) Date of filing: **17.02.2005**

(86) International application number:
**PCT/US2005/005320**

(87) International publication number:
**WO 2005/082155 (09.09.2005 Gazette 2005/36)**

(54) **A METHOD FOR THE PREPARATION OF A HIGH-PURITY RICE PROTEIN CONCENTRATE**

VERFAHREN ZUR HERSTELLUNG EINES HOCHREINEN REISPROTEINKONZENTRATS

PROCEDE DE PREPARATION D'UN CONCENTRE PROTEIQUE DE RIZ DE PURETE ELEVEE

(84) Designated Contracting States:
**AT BE BG CH CY CZ DE DK EE ES FI FR GB GR HU IE IS IT LI LT LU MC NL PL PT RO SE SI SK TR**

(30) Priority: **23.02.2004 US 547153 P**

(43) Date of publication of application:
**02.11.2006 Bulletin 2006/44**

(73) Proprietor: **GENENCOR INTERNATIONAL, INC.**
**Palo Alto, California 94304 (US)**

(72) Inventors:
• **DUNN-COLEMAN, Nigel**
**Los Gatos, CA 95032 (US)**
• **SHETTY, Jayarama, K.**
**Pleasanton, CA 94566 (US)**
• **DUAN, Gang**
**Singapore 130030 (SG)**
• **SUNG, Alex**
**789096 Singapore (SG)**
• **QIAN, Ying**
**214036 Wuxi (CN)**

(74) Representative: **Kremer, Simon Mark et al**
**Mewburn Ellis LLP**
**33 Gutter Lane**
**London**
**EC2V 8AS (GB)**

(56) References cited:
EP-A2- 0 350 952          JP-A- 6 197 699
US-A- 4 894 242          US-A- 5 292 537

• CHEN W-P ET AL: "PRODUCTION OF HIGH-FRUCTOSE RICE SYRUP AND HIGH-PROTEIN RICE FLOUR FROM BROKEN RICE" JOURNAL OF THE SCIENCE OF FOOD AND AGRICULTURE, WILEY & SONS, CHICHESTER, GB, vol. 35, no. 10, 1984, pages 1128-1135, XP009080988 ISSN: 0022-5142
• CHANG K C ET AL: "PRODUCTION AND NUTRITIONAL EVALUATION OF HIGH-PROTEIN RICE FLOUR" JOURNAL OF FOOD SCIENCE, INSTITUTE OF FOOD TECHNOLOGISTS, CHICAGO, IL, US, vol. 51, no. 2, 1986, pages 464-467, XP009023493 ISSN: 0022-1147 cited in the application

## Description

The present application claims priority to U.S. Provisional Patent Application Serial No. 60/547,153, entitled A Method for the Preparation of a High-Purity Rice Protein Concentrate, filed February 23, 2004, the contents of which are incorporated herein in its entirety.

## FIELD OF THE INVENTION

The present invention relates to a method for the preparation of a rice protein concentrate. The method comprises enzymatically hydrolyzing a rice substrate at a temperature below the denaturation temperature and at or near the isoelectric pH of the protein in the rice substrate to obtain a fraction including solubilized granular starch hydrolysate and a residue including insoluble rice protein and separating the solubilized starch hydrolysate fraction from the residue including the Insoluble rice protein to obtain a rice protein concentrate and particularly a high-purity rice protein concentrate.

## BACKGROUND OF THE INVENTION

Rice is a major food grain for more than half the world's population. Proteins (8%) and starch (80%) make up the two main components of rice. Even though rice protein is a desirable food ingredient, rice Is processed Industrially for its starch and starch hydrolysate, and the rice protein is used mainly in animal feed applications.

Methods for producing solubilized rice starch hydrolysates and the separation of rice protein from the starch are known. Commonly, the separation of rice proteins from rice flour is carried out by solubilizing rice starch by heating at high temperatures which is followed by hydrolyzing using starch degrading amylases (See for example, Hansen et al., (1981) Food Technology 35:38 - 42; Chen et al., (1984) J. Sci. Food Agric. 35: 1128-1135; and Shin et al., (1997) Cereal Chem. 74:437 - 441 and Juliano B.O. (1984) IN STARCH; CHEMISTRY AND TECHNOLOGY, 2nd Ed. Ed. R.L. Whistler et al., Academic Press, New York, pp.507 - 528). More specifically, Mitchell et al., (U.S. Pat. No. 4,744,922) disclose a process to produce rice starch hydrolysate using conventional high temperature Jet cooking processes. Slott et al., (U.S. Pat. No. 3,912,590) disclose a process to solublize rice starch, which is followed by hydrolyzing using a thermostable alpha amylase. Euber et al., (U.S. Pat. No. 4,990,344) report a process for making rice protein concentrate with reduced levels of manganese, aluminum and phytic acid and with improved digestibility for use in infant food formulations by solubilizing and hydrolyzing the rice starch at an elevated temperature with thermostable alpha amylase.

The processes described above are performed at high temperatures and generally in the range of 90°C. At these solubilization temperatures for granular starch, the protein in rice will be denatured. It is reported that rice protein is generally denatured at temperatures above 75°C (Ju et al., (2001) J. Food Sci. 66:229 - 232). Protein denaturation results in a loss of many functional properties which play a role in food formulations. For example, the nutritional value and digestibility of rice protein concentrate produced at a high temperature treatment is lower than the nutritional value of the milk protein, casein, which is used as the industry standard. (Morita et al., (1993) J. Food Sci. 58:1393 - 1406 and Chang et al. (1993) J. Food Sci. 51:464 - 467). Therefore, as mentioned above industrially produced rice protein, which results from high temperature cooking, is predominantly sold in the animal feed market.

The process of separating rice proteins from rice starch without starch solubilization presents a number of disadvantages. The process is time consuming and expensive and further the product yield is low. Additionally, high alkali, acid and surfactant compounds typically used in the process are unattractive, particularly if the protein is intended for food applications.

Rice proteins are valuable because they are hypoallergenic (Helm et al., (1996) Cereal Foods World 41: 839 - 843) and high in essential amino acids, such as methionine (Tecson et al., (1971) Cereal Chem. 48:91 - 202). Therefore, it would be desirable to improve the quality and quantity of rice protein as a by-product of starch processing by developing a process whereby rice protein, which was obtained from a rice substrate used in starch processing, was not denatured. The protein could then be used in various applications, such as in human food applications. For example, during microbial fermentations in the production of monosodium glutamate, vast amounts of rice substrate are used, and this results in the by-product of a large quantity of denatured rice protein. In China alone, it is estimated that approximately 2.6 metric tons of rice substrate would be required to meet the annual production of monosodium glutamate which exceeds $1.0 \times 10^6$ metric tons. A tremendous benefit would be gained if the production of MSG yielded a high rice protein concentrate as opposed to a denatured protein by-product.

The present invention provides a method for the production of a rice protein concentrate, and particularly a high-purity rice protein concentrate obtained during starch processing wherein the process does not include subjecting a rice substrate containing starch and protein to a high temperature treatment but instead includes subjecting the rice substrate to temperatures below the denaturation temperature of the rice substrate protein.

The rice protein concentrate produced by the method encompassed by the invention may be used in various applications, including uses in human food formulations and in animal feed. It Is an additional advantage to obtain a rice protein concentrate according to the methods encompassed by the invention because in general rice protein has a high level of certain essential amino acids and low human allergenicity.

## BRIEF SUMMARY OF THE INVENTION

It is an object of the present invention to provide a process for preparing a high-purity rice protein concentrate from a rice substrate by hydrolyzing granular rice starch below the denaturation temperature of the rice protein contained in the rice substrate and at or near the isoelectric pH of the rice protein by contacting a rice substrate with two starch hydrolyzing enzymes, wherein the first starch hydrolyzing enzyme is a granular starch hydrolyzing (GSH) enzyme.

Accordingly, in one aspect the invention provides a process for producing a rice protein concentrate from a rice substrate comprising, a) enzymatically hydrolyzing a rice substrate with i) an enzyme having granular starch hydrolyzing (GSH) activity and ii) a second starch hydrolyzing enzyme at a temperature at or below 72°C and at a pH of about 3.0 to 6.5 for a period of time sufficient for the hydrolysis of a substantial portion of the starch in the rice substrate to obtain a solubilized starch fraction and a residue fraction which includes Insoluble protein and b) separating the solubilized starch fraction from the residue to obtain a rice protein concentrate.

In one aspect, the enzyme having GSH activity may be a glucoamylase, such as a glucoamylase derived from a strain of *Humicola, Rhizopus* or *Aspergillus.*

In one aspect, the second starch hydrolyzing enzyme may be an alpha-amylase, such as an alpha-amylase derived from a bacterial source.

The enzyme having GSH activity may be obtained from the heterologous expression of a GSH enzyme in a *Trichoderma* strain or an *Aspergillus* strain.

The process may further comprise the step purifying the rice protein concentrate.

The process may further comprise the step of drying the rice protein concentrate.

In one aspect, the protein content of the rice protein concentrate is at least about 20%.

In one aspect, the rice substrate is slurried and has a dry solid content of between 10 to 55%.

In one aspect, the temperature is between 70°C and 55°C.

The process may further comprise the step of c) enzymatically hydrolyzing the rice protein concentrate obtained in step b) with an enzyme having GSH activity and a starch hydrolyzing enzyme at a pH of about 3.0 to 6.5 and at a temperature range of 70°C to 55°C to obtain a fraction including solubilized starch and insoluble rice protein and d) separating the fractions to obtain a high-purity rice protein concentrate.

In one aspect, the process further comprises drying the high-purity rice protein concentrate obtained in step d).

In one aspect, the starch hydrolyzing enzyme of step c) is an alpha amylase.

In one aspect, the protein content of the high-purity rice protein concentrate is at least about 60%.

Described herein is a process for producing a rice protein concentrate from a rice substrate comprising, (a) contacting a rice substrate having a dry solid content of between 10 to 55% with a combination of two starch hydrolyzing enzymes at a temperature equal to or below the denaturation temperature of the rice protein contained in the rice substrate and at about the isoelectric pH of the rice protein to obtain a solubilized starch hydrolysate, wherein the first starch hydrolyzing enzyme is a granular starch hydrolyzing (GSH) enzyme, and (b) separating the solubilized starch hydrolysate to obtain a rice protein concentrate.

In one aspect, the denaturation temperature is at or below 70°C and the pH is between about pH 3.0 to pH 6.0.

In one aspect, the starch hydrolyzing enzymes are alpha amylases and glucoamylases.

In one aspect, the glucoamylase is a granular starch hydrolyzing enzyme (GSHE) derived from a *Humicola grisea* var. *thermoldea* strain (H-GSHE) or an *Aspergillus awamori* var. *kawachi* strain.

In one embodiment, the alpha amylase is derived from a *Bacillus,* and particularly a strain of *B. stearothermophilus.*

In one aspect, the GSHE is a glucoamylase obtained from a recombinant *Trichoderma* strain, particularly a *T. reesei* strain which expresses a heterologous gene encoding a *Humicola grisea* GSHE (rH-GSHE) or an *Aspergillus awamori* var. *kawachi* (rA-GSHE).

In one aspect, the rice protein concentrate obtained from the separating step has a protein content (N x 5,92) of about at least 40%. In other preferred embodiments, the rice protein concentrate obtained from the separating step has a protein content (N x 5.92) of about at least 60%. The rice protein concentrate may be a high-purity rice protein concentrate having a protein content of at least about 65%.

Also described herein is the rice protein concentrate obtained according to the process encompassed by the invention.

Described herein is a process for producing a high-purity rice protein concentrate from a rice substrate comprising, (a) incubating a slurry of a rice substrate with two starch hydrolyzing enzymes, at a temperature below the denaturation temperature of the rice protein contained in the rice substrate and at a pH of between about 3.0 to 6.0 for a period of time sufficient for hydrolysis of a substantial portion of the granular starch of the rice substrate, wherein one of the starch hydrolyzing enzymes is a granular starch hydrolyzing enzyme, and (b) separating the starch hydrolysate from the incubated slurry to obtain a residue comprising a substantially insoluble rice protein concentrate.

In one aspect, the process further comprises (c) incubating the residue including the substantially insoluble rice protein concentrate at a temperature below the denaturation temperature of the rice protein contained in the rice substrate with a starch hydrolyzing enzyme for a sufficient period of time until the residue Is substantially free from all starch to obtain a high-purity rice protein concentrate; and (d) separating the high-purity rice protein concentrate.

In one aspect, the incubation temperature is about 70°C and in other aspects, the incubation temperature is about 60°C.

In one aspect, the second starch hydrolyzing enzymes of step a) is an alpha amylase.

In one aspect, the alpha amylase is derived from a *Bacillus,* and particularly a strain of *B. stearothermophilus.*

In one aspect, the granular starch hydrolyzing enzyme (GSHE) is a glucoamylase derived from a *Humicola grisea* var. *thermoidea* strain (H-GSHE).

In one aspect, the GSHE is a GSHE from a *Humicola grisea* var. *thermoidea* strain expressed in a *Trichoderma* strain, and particularly a *T. reesei* strain (rH-GSHE).

In one aspect, the pH of the incubation step is between about 4.0 and 6.0.

In one aspect, the enzymatic reaction of either or both incubation steps is terminated by lowering the pH to a value of less than about pH 4.0.

In one aspect, the incubation of step (a) is for approximately 24 hours.

In one aspect, more than 90% of the granular rice starch is hydrolyzed in incubation step (a), and in a further embodiment more than 90% of the remaining starch is hydrolyzed in incubation step (c).

In one aspect, the protein content of the high-purity rice protein concentrate is at least 65%.

In one aspect, the rice protein concentrate is dried until the moisture content is less than 10%.

Also described herein is a high-purity rice protein concentrate obtained according to the process described herein, wherein the high-purity rice protein concentrate includes at least 65% protein.

In one aspect, the invention pertains to a process for producing a high-purity rice protein concentrate from a rice substrate comprising, (a) incubating a slurry of a rice substrate with I) an alpha-amylase obtained from a *Bacillus stearothermophilus* and II) a granular starch hydrolyzing enzyme obtained from the expression of a *Humicola grisea* var. *thermoidea* GSHE in a *Trichoderma reesei* host at a temperature between about 70°C to 50°C and at a pH of between about 3.0 to 6.0 for a period of time sufficient for hydrolysis of at least 90% of the granular starch of the rice substrate, (b) separating the starch hydrolysate from the incubated slurry to obtain a residue comprising a rice protein concentrate; (c) incubating the residue comprising the rice protein concentrate with the alpha amylase and the GSHE at a temperature between 70°C to 50°C and at a pH of between about 3.0 to 6.0 for a period of time sufficient for hydrolysis of at least 80% of the granular starch of the residue to obtain a residue comprising a high-purity rice protein concentrate having a protein content of at least 65%; and (d) recovering the high-purity rice protein concentrate.

In one aspect the invention pertains to a method of increasing the protein content of an animal feed comprising contacting a rice substrate with a combination of enzymes which include a granular starch hydrolyzing (GSH) enzyme at a temperature below 72°C for a sufficient period of time to hydrolyze 60% of the starch in the rice substrate, obtaining a solublized starch fraction and a residue which includes insoluble protein, separating the residue to obtain a rice protein concentrate and adding the rice protein concentrate to an animal feed.

In one embodiment, the combination of enzymes includes the GSH enzyme and an alpha amylase. In a second embodiment, the method further comprises, contacting the residue which includes the insoluble protein with a granular starch hydrolyzing enzyme and optionally a starch hydrolyzing enzyme to obtain a fraction including solubilised starch and a residue comprising insoluble rice protein, separating the residue to obtain a high-purity rice protein concentrate and adding the high-purity rice protein concentrate to an animal feed.

## BRIEF DESCRIPTION OF THE DRAWINGS

Figure 1 provides the genomic DNA sequence coding for the native *H. grisea* var. *thermoidea* granular starch hydrolyzing enzyme (GSHE) (SEQ ID NO:1). The putative introns are in bold and underlined.

Figure 2A provides the signal sequence and mature amino acid sequence for *H. grisea* var. *thermoidea* GSHE (SEQ ID NO:2). The putative signal sequence is in bold and underlined.

Figure 2B provides the mature amino acid sequence for *H. grisea* var. *thermoidea* GSHE (SEQ ID NO:3).

Figure 3 provides an illustration of pTrex3g_N13 plasmid, which was used for expression of the nucleic acid encoding the *Humicola grisea* GSHE and which contains the Xba1 sites flanking the fungal expression vector wherein a) *cbh*l promoter is the *Trichoderma reesei* celloblohydrolase promoter, b) *H. grisea gl a*1 is the polynucleotide encoding the *Humicola grisea* GSHE of SEQ ID NO:3, c) *amd*S is an *Aspergillus nidulans* acetamidase marker gene, and d) *cbh*I terminator is the *Trichoderma reesei* celloblohydrolase terminator,

Figure 4 provides the nucleotide sequence (SEQ ID NO:4) (10739 bp) of the pTrex3g_N13 plasmid of Figure 3.

Figure 5 provides the genomic DNA sequence coding for the native *Aspergillus awamori* var. *kawachi* granular starch hydrolyzing enzyme (A-GSHE) (SEQ ID NO: 5).

Figure 6 provides the putative signal sequence (bold and underlined) and mature amino acid sequence for *Aspergillus awamori* var, *kawachi* GSHE (SEQ ID NO:6 and SEQ ID NO: 7, respectively).

Figure 7 provides the percent (%) of solubillzed granular rice starch as a function of time at pH 5.5 and 60°C with

a) alpha amylase, G-Zyme G997 at 0.1 kg/MT G997), ( - - - ◇ - - -);

b) *Humicola grisea* v. *thermoidea* granular starch hydrolyzing enzyme expressed in *Trichoderma reesei* (rH-GSHE) at 1.0 GSHE Unit/g), (- - - ■ - - -); and

c) a combination of both ( - - - ▲ - - - ).

Reference is also made to example 2, table 2; example 4, table 4; and example 5, table 5.

## DETAILED DESCRIPTION OF THE INVENTION

In some aspects, the present invention relies on routine techniques and methods used in the field of genetic engineering and molecular biology. The following resources include descriptions of general methodology useful in accordance with the invention: Sambrook et al., MOLECULAR CLONING: A LABORATORY MANUAL (2nd Ed., 1989); Kreigler, GENE TRANSFER AND EXPRESSION; A LABORATORY MANUAL (1990) and Ausubel et al., Eds. CURRENT PROTOCOLS IN MOLECULAR BIOLOGY (1994).

Unless defined otherwise herein, all technical and scientific terms used herein have the same meaning as commonly understood by one of ordinary skill in the art to which this invention belongs. Singleton, et al., DICTIONARY OF MICROBIOLOGY AND MOLECULAR BIOLOGY, 2D ED., John Wiley and Sons, New York (1994), and Hale & Markham, THE HARPER COLLINS DICTIONARY OF BIOLOGY, Harper Perennial, NY (1991) provide one of skill with a general dictionary of many of the terms used in this invention. Although any methods and materials similar or equivalent to those described herein can be used in the practice or testing of the present invention, the preferred methods and materials are described.

The invention will now be described in detail by way of reference only using the following definitions and examples. All patents and publications, including all sequences disclosed within such patents and publications, referred to herein are expressly incorporated by reference.

Numeric ranges are inclusive of the numbers defining the range.

Unless otherwise indicated, nucleic acids are written left to right in 5' to 3' orientation; amino acid sequences are written left to right in amino to carboxy orientation, respectively.

The headings provided herein are not limitations of the various aspects or embodiments of the invention, which can be had by reference to the specification as a whole.

A. Definitions.

The term "rice" refers to a plant which is classified as a strain of *Oryza sativa*.

The term "rice substrate" includes all forms of rice (polished or unpolished), such as whole grains, broken grains, rice grits and rice flour and any plant part.

As used herein the term "starch" refers to any material comprised of the complex polysaccharide carbohydrates of plants, comprised of amylose and amylopectin with the formula $(C_6H_{10}O_5)_x$, wherein X can be any number.

The term "granular starch" refers to uncooked (raw) starch, which has not been subject to gelatinization. The term "gelatinization" refers to solubilization of a starch molecule to form a viscous suspension.

The term "rice protein concentrate" refers to a protein fraction which results from the separation of a substantial portion of the solubilized rice starch hydrolysate from a rice substrate according to the process of the invention, wherein the protein content of the rice protein concentrate is greater than about 10%.

The term "high-purity rice protein concentrate" refers to a protein fraction which results from the separation of a substantial portion of the solubilized rice starch hydrolysate from a rice substrate according to the process of the invention, wherein the protein content of the high-purity rice protein concentrate is at least about 60%, 63%, 65%, 66%, 67%, 68%, 69%, 70%, 72%, 75% 80% or greater.

The term "protein" refers to polymers of large molecular mass composed of one or more polypeptide chains and whose monomers are amino acids joined together by peptide bonds. The terms "protein" and "polypeptide" are sometimes used interchangeably herein. The conventional one-letter or three-letter code for amino acid residues is used herein.

The term "denaturation temperature" refers to the temperature at which proteins lose their function which results from the dissolution of secondary and tertiary structure. Generally, the proteins are precipitated out of solution.

The term "isoelectric point" refers to the pH of a solution at which a protein or proteins carry a net zero charge.

The term "DE" or "dextrose equivalent" is an industry standard for measuring the concentration of total reducing sugars, calculated as D-glucose on a dry weight basis. Unhydrolyzed granular starch has a DE that is essentially 0 and D-glucose has a DE of 100.

The term "total sugar content" refers to the total sugar content present in a starch composition.

The term "dry solids content (ds)" refers to the total solids of a slurry (in %) on a dry weight basis.

The term "slurry" refers to an aqueous mixture including insolubles.

"Brix" refers to a well known hydrometer scale for measuring the sugar content of a solution at a given temperature. The Brix scale measures the number of grams of sucrose present per 100 grams of aqueous sugar solution (the total solubilized solid content). Brix measurements are frequently made by use of a hydrometer or refractometer.

The term "hydrolysis of starch" refers to the cleavage of glucosidic bonds with the addition of water molecules.

The phrases "hydrolysis of a substantial portion of the starch of a rice substrate" or "separation of a substantial portion of the solubilized rice starch hydrolysate from a rice substrate" means that at least 80% of the starch in the rice substrate or in the residue has been solubilized and hydrolyzed.

The term "degree of polymerization (DP)" refers to the number (n) of anhydroglucopyranose units in a given saccharide. Examples of DP1 are the monosaccharides, such as glucose and fructose. Examples of DP2 are the disaccharides, such as maltose and sucrose. A "DP4+" denotes polymers with a degree of polymerization of greater than 3.

The term "amylases" refer to enzymes that catalyze the hydrolysis of starches.

The term "alpha-amylase (E.C. class 3.2.1.1)" refers to enzymes that catalyze the hydrolysis of alpha-1,4-glucosidic linkages. These enzymes have also been described as those effecting the exo or endohydrolysis of $1,4-\alpha$-D-glucosidic linkages in polysaccharides containing $1,4-\alpha$-linked D-glucose units. Another term used to describe these enzymes is glycogenase. Exemplary enzymes include alpha-1 ,4-glucan 4-glucanohydrase glucanohydrolase.

The term "glucoamylase" herein refers to the amyloglucosidase class of enzymes (EC.3.2.1.3, glucoamylase, alpha-1, 4-D-glucan glucohydrolase). These are exo-acting enzymes, which release glucosyl residues from the non-reducing ends of amylose and amylopectin molecules. The enzymes also hydrolyzes alpha-1, 6 and alpha -1,3 linkages although at much slower rates than alpha-1, 4 linkages.

The term "granular starch hydrolyzing enzyme (GSHE)" or "an enzyme having granular starch hydrolyzing (GSH) activity" as used herein refers to an enzyme having the ability to hydrolyze starch in granular form.

The term "recombinant" when used with reference, e.g., to a cell, nucleic acid, protein or vector, indicates that the cell, nucleic acid, protein or vector, has been modified by the introduction of a heterologous nucleic acid or protein or the alteration of a native nucleic acid or protein, or that the cell is derived from a cell so modified. Thus, for example, recombinant cells express genes that are not found within the native (non-recombinant) form of the cell or express native genes that are otherwise abnormally expressed, under expressed or not expressed at all.

The terms "recombinant GSHE", "recombinantly expressed GSHE" and "recombinantly produced GSHE" refer to a mature GSHE protein sequence that is produced in a host cell from a heterologous polynucleotide. The symbol "r" may be used to denote recombinant. The protein sequence of a rGSHE excludes a signal sequence. In one embodiment *Humicola grisea* var. *thermoidea* GSHE expressed in a strain of *Trichoderma reesei* is denoted by "rH-GSHE".

The terms "native GSHE" and "nGSHE" mean a GSHE, which was derived from a host organism wherein the polynucleotide encoding the GSHE is endogenous to the host organism. Preferred native GSHEs are derived from a *Humicola grisea* strain or an *Aspergillus awamori* strain.

The term "glycosylation" refers to the post-transcriptional modification of a protein by the addition of carbohydrate moieties, wherein the carbohydrate is either N-linked or O-linked resulting in a glucoprotein. An N-linked carbohydrate moiety of a glycoprotein is attached by a glycosidic bond to the β-amide nitrogen of an asparagine residue. An O-linked carbohydrate is attached by a glycosidic bond to a protein through the hydroxy group of a serine or a threonine residue.

A "signal sequence" means a sequence of amino acids bound to the N-terminal portion of a protein, which facilitates the secretion of the mature form of the protein outside the cell. The definition of a signal sequence is a functional one. The mature form of the extracellular protein lacks the signal sequence which is cleaved off during the secretion process.

A "gene" refers to a DNA segment that is involved in producing a polypeptide and includes regions preceding and following the coding regions as well as intervening sequences (introns) between individual coding segments (exons).

The term "nucleic acid" means either DNA, RNA, single stranded or double stranded and chemical modifications thereof. The terms "nucleic acid" and "polynucleotide" may be used interchangeably herein. Because the genetic code is degenerate, more than one codon may be used to encode a particular amino acid, and the present invention encompasses polynucleotides, which encode a particular amino acid sequence.

A "vector" refers to a polynucleotide sequence designed to introduce nucleic acids into one or more cell types.

Vectors include cloning vectors, expression vectors, shuttle vectors, plasmids, phage particles, cassettes and the like.

An "expression vector" as used herein means a DNA construct comprising a DNA sequence which is operably linked to a suitable control sequence capable of effecting expression of the DNA in a suitable host. Such control sequences may include a promoter to effect transcription, an optional operator sequence to control transcription, a sequence encoding suitable ribosome binding sites on the mRNA, enhancers and sequences which control termination of transcription and translation.

A "promoter" is a regulatory sequence that is involved in binding RNA polymerase to initiate transcription of a gene. The promoter may be an inducible promoter or a constitutive promoter. A preferred promoter used in the invention is *Trichoderma reesei* cbh1, which is an inducible promoter.

"Under transcriptional control" is a term well understood in the art that indicates that transcription of a polynucleotide sequence, usually a DNA sequence, depends on its being operably linked to an element which contributes to the initiation of, or promotes transcription.

"Under translational control" is a term well understood in the art that indicates a regulatory process that occurs after mRNA has been formed,

As used herein when describing proteins and genes that encode them, the term for the gene is not capitalized and is italicized, e.g. the gene that encodes the *Humicola grisea* GSHE may be denoted as *gla*1. The term for the protein is generally not italicized and the first letter is capitalized, e.g. the protein encoded by the *gla*1 gene may be denoted as Gla1.

The term "operably linked" refers to juxtaposition wherein the elements are in an arrangement allowing them to be functionally related. For example, a promoter is operably linked to a coding sequence if it controls the transcription of the sequence.

The term "selective marker" refers to a gene capable of expression in a host that allows for ease of selection of those hosts containing an introduced nucleic acid or vector. Examples of selectable markers include but are not limited to antimicrobials (e.g. hygromycin, bleomycin, or chloramphenicol) or genes that confer a metabolic advantage, such as a nutritional advantage on the host cell.

The term "derived" encompasses the terms originated from, obtained or obtainable from, and isolated from.

"Host strain" or "host cell" means a suitable host for an expression vector or DNA construct comprising a polynucleotide encoding a GSHE according to the invention. Specifically host strains are filamentous fungal cells. In a preferred embodiment of the invention, "host cell" means both the cells and protoplasts created from the cells of a filamentous fungal strain and particularly a *Trichoderma sp.*

The term "filamentous fungi" refers to all filamentous forms of the subdivision Eumycotina (See, Alexopoulos, C. J. (1962), INTRODUCTORY MYCOLOGY, New York: Wiley). These fungi are characterized by a vegetative mycelium with a cell wall composed of chitin, cellulose, and other complex polysaccharides. The filamentous fungi of the present invention are morphologically, physiologically, and genetically distinct from yeasts. Vegetative growth by filamentous fungi is by hyphal elongation and carbon catabolism is obligatory aerobic. In the present invention, the filamentous fungal parent cell may be a cell of a species of, but not limited to, *Trichoderma, e.g., Trichoderma reesei* (previously classified as *T.longibrachiatum* and currently also known as *Hypocrea jecorina*), *Trichoderma viride, Trichoderma koningii, Trichoderma harzianum; Penicillium sp.; Humicola sp.,* including *Humicola insolens* and *Humicola grisea; Chrysosporium sp.,* including *C. lucknowense; Gliocladium sp.; Aspergillus sp.,* including *A. oryzae, A. nidulans, A. niger,* and *A. awamori; Fusarium sp., Neurospora sp., Hypocrea sp., and Emericella sp.* Reference is also made to Innis et al., (1985) Sci. 228:21 -26.

As used herein, the term "*Trichoderma*" or "*Trichoderma sp.*" refer to any fungal strain, which had previously been classified as *Trichoderma* or is currently classified as *Trichoderma.*

The term "contacting" refers to the placing of the respective enzymes in sufficiently close proximity to a respective rice substrate. Those skilled in the art will recognize that mixing solutions of the enzymes with the respective rice substrate can effect contacting.

The term "incubating" refers to mixing a rice substrate with hydrolyzing enzymes under given conditions for a defined period of time.

The term "enzymatic conversion" refers to the modification of a rice substrate to yield soluble hydrolyzed granular rice starch and preferably to yield glucose.

The term "slurry" refers to an aqueous mixture containing insoluble granular starch. Sometimes the terms "slurry" and "suspension" are used interchangeably herein.

The term "culturing" refers to growing a population of microbial cells under suitable conditions in a liquid or solid medium. In one embodiment, culturing refers to fermentative bioconversion of a granular starch substrate to glucose syrup or other desired end products (typically in a vessel or reactor).

The term "heterologous" or "exogenous" with reference to a polynucleotide or protein refers to a polynucleotide or protein that does not naturally occur in a host cell. In some embodiments, the protein is a commercially important industrial protein. It is intended that the term encompass proteins that are encoded by naturally occurring genes, mutated genes and/or synthetic genes. The term "homologous" or "endogenous" with reference to a polynucleotide or protein refers to a polynucleotide or protein that occurs naturally in the host cell.

The terms "recovered", "isolated", and "separated" as used herein refer to a protein, cell, nucleic acid, or amino acid that is removed from at least one component with which it is naturally associated. The terms also refer to separating a mixture comprising soluble starch hydrolysate from a residue comprising substantially insoluble rice protein.

As used herein, the terms "transformed", "stably transformed" or "transgenic" with reference to a cell means the cell has a non-native (heterologous) nucleic acid sequence integrated into its genome or as an episomal plasmid that is maintained through multiple generations.

As used herein, the term "expression" refers to the process by which a polypeptide is produced based on the nucleic acid sequence of a gene. The process includes both transcription and translation.

The term "introduced" in the context of inserting a nucleic acid sequence into a cell, means "transfection", or "transformation" or "transduction" and includes reference to the incorporation of a nucleic acid sequence into a eukaryotic or prokaryotic cell where the nucleic acid sequence may be incorporated into the genome of the cell (for example, chromosome, plasmid, plastid, or mitochondrial DNA), converted into an autonomous replicon, or transiently expressed (for example, transfected mRNA).

As used herein the term "specific activity" means an enzyme unit defined as the number of moles of substrate converted to product by an enzyme preparation per unit time under specific conditions. Specific activity is expressed as units (U)/mg of protein.

As used herein "enzyme activity" refers to the action of an enzyme on its substrate.

As used herein the term "enzyme unit" refers to the amount of enzyme that converts 1 mg of substrate per minute to the substrate product at optimum assay conditions.

For example, in one embodiment, the term "granular starch hydrolyzing enzyme unit (GSHE U)" is defined as being the amount of enzyme required to produce 1 mg of glucose per minute from granular starch under assay conditions of, for example 50°C at pH 4.5.

For example, in another embodiment, the term alpha amylase enzyme unit (AAU) is defined as the amount of alpha amylase which hydrolyzes 1 micromole of starch substrate in 1 min under standard assay conditions of pH 5.2 and 40°C.

In other embodiments, a glucoamylase unit (GAU) is defined as the amount of enzyme that will produce 1 gm of reducing sugar calculated as glucose per hour from a soluble starch substrate under conditions of 60°C at pH 4.2

"ATCC" refers to American Type Culture Collection located at Manassas, VA 20108 (ATCC, www/atcc.org).

"NRRL" refers to the Agricultural Research Service Culture Collection, National Center for Agricultural Utilization Research (and previously known as USDA Northern Regional Research Laboratory), Peoria, ILL.

"A", "an" and "the" include plural references unless the context clearly dictates otherwise.

As used herein the term "comprising" and its cognates are used in their inclusive sense; that is, equivalent to the term "including" and its corresponding cognates.

B. Preferred Embodiments.

Rice Substrates:

A rice substrate to be employed in the process of the invention may be obtained from any known source. In some preferred embodiments, the rice substrate is rice flour and in other preferred embodiments the rice substrate is a polished rice substrate. While not meant to limit the invention in any manner, in general rice flour from grain contains about 6 - 10% protein (N x 5.95); about 70 - 82% carbohydrate; about 9 - 12% moisture; about 0.4 - 1.5% crude fat; about 0.6 to 0.8% ash and about 0.2 to 0.6% fiber.

Rice proteins found in the grain have limited solubility in water. These proteins are predominantly found as insoluble (alkali-soluble) glutelins (about 80 - 90%); salt-soluble globulins (7 - 15%) water-soluble albumins (9 - 10%) and alcohol-soluble prolamins (about 2 - 5%). See, Houston et al., (1970) Cereal Chem. 47:5; Perdon et al., (1978) Phytochem. 17:351, and Landers et al., (1994) Cereal Chem 71:409 - 41.1.

In some embodiments of the invention, the rice substrate is milled to a desired particle size prior to dispersion in water or wet ground during processing. In some embodiments of the methods encompassed by the invention, the rice substrate, such as rice flour is slurried (generally with water) and the rice substrate will comprise i) about 10 to about 55% ds, ii) about 20 to about 50% ds; iii) about 25 to about 45% ds; iv) about 20 to about 40% ds; v) about 20 to about 35% ds; and vi) also about 30 to 35% ds.

Enzymes:

Granular Starch Hydrolyzing Enzymes -

At least one of the starch hydrolyzing enzymes used in the methods encompassed by the invention is a granular starch hydrolyzing enzymes (GSHEs). Some granular starch hydrolyzing enzymes have glucoamylase activity and some of these enzymes have alpha amylase activity (See, Tosi et al., (1993) Can. J. Microbiol. 39:846 -855 and Kanlayakrit et al., (1987) J. Ferment. Technol. 65:379 - 385). Suitable GSH enzymes may be naturally occurring as well as recombinant and mutant GSH enzymes. Naturally occurring GSHEs have been recovered from fungal cells such as *Humicola* sp., *Aspergillus* sp., *Mucor* sp. and *Rhizopus* sp. A *Rhizopus oryzae* GSHE has been described in Ashikari et al., (1986) Agric. Biol. Chem. 50:957-964 and USP 4,863,864. A *Humicola grisea* GSHE has been described in Allison et al., (1992) Curr. Genet. 21:225-229 and European Patent No. 171218. The gene encoding this enzyme is also known in the art as *gla*1. An *Aspergillus awamori* var. *kawachi* GSHE has been described by Hayashida et al., (1989) Agric. Biol. Chem 53:923-929. An *Aspergillus shirousami* GSHE has been described by Shibuya et al., (1990) Agric. Biol. Chem. 54: 1905-1914.

In some preferred embodiments, the GSHE is recovered from fungi including ATCC 16453, NRRL 15219, NRRL 15220, NRRL 15221, NRRL 15222, NRRL 15223, NRRL 15224 and NRRL 15225 as well as genetically altered strains thereof. (EP 0 171218).

In one embodiment, a GSHE may be derived from a strain of *Humicola grisea,* particularly a strain of *Humicola grisea* var. *thermoidea* (H-GSHE) (see, USP 4,618,579).

In one embodiment, a GSHE may be derived from a strain of *Aspergillus awamori,* particularly a strain of *A. awamori var. kawachi* (A-GSHE) (See, Hayashida et al., (1989) Agric. Biol. Chem. 53:923-929).

In one embodiment, the GSHE used in the process encompassed by the invention has at least 50%, 55%, 60%, 65%, 70%, 75%, 80%, 85%, 90%, 93%, 95%, 97%, 98% and 99% sequence identity with the amino acid sequence set forth in SEQ ID NO: 3. In other embodiments, the GSHE comprising the amino acid sequence of SEQ ID NO: 3 or a GSHE having at least 80% sequence identity with the sequence of SEQ ID NO: 3 is encoded by a polynucleotide having at least 70%, 80%, 85%, 90%, 93%, 95%, 97%, 98% and 99% sequence identity with SEQ ID NO: 1.

In another embodiment, the GSHE used in the process encompassed by the invention has at least 50%, 55%, 60%, 65%, 70%, 75%, 80%, 85%, 90%, 93%, 95%, 97%, 98% and 99% sequence identity with the amino acid sequence set forth in SEQ ID NO: 7. In other embodiments, the GSHE comprising the amino acid sequence of SEQ ID NO: 7 or a GSHE having at least 80% sequence identity with the sequence of SEQ ID NO: 7 is encoded by a polynucleotide having at least 70%, 80%, 85%, 90%, 93%, 95%, 97%, 98% and 99% sequence identity with SEQ ID NO: 5.

A polynucleotide or polypeptide having a certain percent (e.g., 80%, 85%, 90% or 99%) of sequence identity with another sequence means that when aligned, that percent of bases or amino acid residues are the same in comparing the two sequences. This alignment and the percent homology or identity can be determined using any suitable software program known in the art, for example those described in Current Protocols in Molecular Biology (Ausubel et al., eds 1987 Supplement 30, section 7.7.18). Preferred programs include GCG Pileup program, FASTA and BLAST. Another preferred alignment program is ALIGN Plus and TFASTA.

In a further embodiment, a GSHE enzyme may be derived from a strain of *Rhizopus.* Such as the enzyme derived from the Koji strain of *R. niveus* (sold under the trade name "CU CONC") or the enzyme from *Rhizopus* sold under the trade name GLUCZYME.

Alpha Amylases -

In some of the embodiments encompassed by the invention, the granular starch hydrolyzing enzyme will be combined with an alpha amylase. Alpha amylases are microbial enzymes having an E.C. number, E.C. 3.2.1.1-3 and in particular E.C. 3.2.1.1. In some embodiments, the alpha amylase is a thermostable bacterial alpha amylase and in other embodiments, the alpha amylase is a fungal alpha amylase. Suitable alpha amylases may be naturally occurring as well as recombinant and mutant alpha amylases. In some particularly preferred embodiments, the alpha amylase is derived from a *Bacillus* species. Preferred *Bacillus* species include *B. subtilis, B. stearothermophilus, B. lentus, B. licheniformis, B. coagulans,* and *B. amyloliquefaciens* (USP 5,763,385; USP 5,824,532; USP 5,958,739; USP 6,008,026 and USP 6,361,809). Particularly preferred alpha amylases are derived from *Bacillus* strains *B. stearothermophilus, B. amyloliquefaciens* and *B. licheniformis.* Also reference is made to strains having ATCC 39709; ATCC 11945; ATCC 6598; ATCC 6634; ATCC 8480; ATCC 9945A and NCIB 8059.

Commercially available alpha amylases contemplated for use in the methods of the invention include; SPEZYME AA; SPEZYME FRED; GZYME G997 (Genencor International Inc.) and TERMAMYL 120-L, LC, SC and SUPRA (Novozymes Biotech.).

Glucoamylases -

Glucoamylases (E.C. 3.2.1.3) are enzymes that remove successive glucose units from the non-reducing ends of starch. The enzyme can hydrolyze both linear and branched glucosidic linkages of starch, amylose and amylopectin. While glucoamylase may be derived from bacteria, plants and fungi, preferred glucoamylases encompassed by the present are derived from fungal strains. Suitable glucoamylase include not only naturally occurring glucoamylases but also recombinant and mutant glucoamylases

Glucoamylases secreted from fungi of the genera *Aspergillus, Rhizopus, Humicola* and *Mucor* have been derived from fungal strains, including *Aspergillus niger, Aspergillus oryzea, Aspergillus awamori, Rhizopus niveus, Rhizopus oryzae, Mucor miehe, Humicola grisea, Aspergillus shirousami* and *Humicola (Thermomyces) laniginosa* (*See,* Boel et al. (1984) EMBO J. 3:1097-1102; WO 92/00381; WO 00/04136; Chen et al., (1996) Prot. Eng. 9:499-505; Taylor et al., (1978) Carbohydrate Res. 61:301 - 308 and Jensen et al., (1988) Can. J. Microbiol. 34:218 - 223).

Enzymes having glucoamylase activity used commercially are produced for examples, from *Aspergillus niger* (trade name OPTIDEX L-400 from Genencor International Inc.) or *Rhizopus* species (trade name CU.CONC. from Shin Nihon Chemicals, Japan and trade name GLUCZYME from Amano Pharmaceuticals, Japan).

Recombinantly produced GSHEs -

In some preferred embodiments, the GHSE used in a method encompassed by the invention is a recombinantly expressed GSHE (rGSHE) obtained from a filamentous fungal strain, which has been genetically engineered to express a heterologous polynucleotide that encodes a GSHE derived from a source other than the host strain.

In some embodiments, the filamentous fungal strain is a strain of *Aspergillus sp., Trichoderma sp., Fusarium sp.,* or *Penicillium sp.* Particularly preferred fungal hosts include *A. nidulans, A. awamori, A. oryzae, A. aculeatus, A. niger, A. japonicus, T. reesei, T. viride, F. oxysporum,* and *F. solani. Aspergillus* strains are disclosed in Ward et al., (1993) Appl. Microbiol. Biotechnol. 39:738-743 and Goedegebuur et al., (2002) Curr. Gene 41:89-98. In a most preferred embodiment, the host is a *Trichoderma* strain and particularly a *T. reesei* strain. Strains of *T. reesei* are known and nonlimiting examples include ATCC No. 13631, ATCC No. 26921, ATCC No. 56764, ATCC No. 56765, ATCC NO. 56767 and NRRL 15709. In some preferred embodiments, the host strain is a derivative of RL-P37. RL-P37 is disclosed in Sheir-Neiss et al., (1984) Appl. Microbiol. Biotechnol.20:46 - 53.

A host strain which expresses GSHE may have be previously manipulated through genetic engineering. In some embodiments, various genes of the fungal host have been inactivated. These genes include, for example genes encoding cellulolytic enzymes, such as endoglucanases (EG) and exocellobiohydolases (CBH) (e.g., *cbh*1, *cbh*2, *egl*1 and *egl*3). US Patent No. 5,650,322 discloses derivative strains of RL-P37 having deletions in the *cbh*1 gene and the *cbh*2 gene.

In some embodiments, the fungal host has been genetically engineered to comprise a polynucleotide encoding a GSHE derived from *Humicola grisea.* In one embodiment the rGSHE will have at least 50%, 55%, 60%, 65%, 70%, 75%, 80%, 85%, 90%, 93%, 95%, 97%, 98% and 99% sequence identity to the amino acid sequence set forth in SEQ ID NO:3. In other embodiments, a polynucleotide encoding the GSHE of SEQ ID NO:3 will have at least 70% sequence identity with the sequence of SEQ ID NO:1.

In other embodiments, the fungal host has been genetically engineered to express a polynucleotide encoding a GSHE derived from *Aspergillus awamori* var. *kawachi.* In one embodiment the rGSHE will have at least 50%, 55%, 60%, 65%, 70%, 75%, 80%, 85%, 90%, 93%, 95%, 97%, 98% and 99% sequence identity to the amino acid sequence set forth in SEQ ID NO:7. In other embodiments, a polynucleotide encoding the GSHE of SEQ ID NO:7 will have at least 70% sequence identity with the sequence of SEQ ID NO:5.

Vectors and Fungal Transformation:

According to the invention the heterologous polynucleotide encoding a GSHE may be introduced into a fungal host cell by a vector, particularly an expression vector which comprises regulatory sequence operably linked to a GSHE coding sequence. The vector may be any vector which when introduced into a fungal host cell is integrated into the host cell genome and is replicated. Reference is made to the Fungal Genetics Stock Center Catalogue of Strains (www.FGSC.net) for a list of vectors. Also, examples of suitable expression and/or integration vectors may be found in Sambrook et al., (1989) *supra,* Ausubel (1987) *supra,* van den Hondel et al. (1991) in Bennett and Lasure Eds. MORE GENE MANIPULATIONS IN FUNGI, Academic Press pp. 396-428 and USP 5,874,276. Particularly useful vectors include pFB6, pBR322, PUC18, pUC100 and pENTR/D.

In some embodiments, a nucleic acid encoding a GSHE is operably linked to a suitable promoter, which shows transcriptional activity in the fungal host cell. The promoter may be derived from genes encoding proteins either homologous or heterologous to the host cell. Preferably, the promoter is useful in a *Trichoderma* host and suitable nonlimiting examples of promoters include *cbh1, cbh2, eg*/1, and *eg*/2. In one embodiment, the promoter is one that is native to the host cell. For example, when *T. reesei* is the host, the promoter is a native *T. reesei* promoter. In a preferred embodiment, the promoter is *T. reesei cbh1,* which is an inducible promoter and has been deposited in GenBank under Accession No. D86235. An inducible promoter is a promoter that is active under environmental or developmental regulation. In another embodiment the promoter is one that is heterologous to the fungal host cell. Other examples of useful promoters include promoters from *A. awamori* and *A. niger* glucoamylase genes (See, Nunberg et al., (1984) Mol. Cell Biol. 4: 2306-2315 and Boel et al., (1984) EMBO J. 3:1581-1585). Also the promoters of *T. reesei xln*1 gene and *cellobiohydrolase* 1 gene may be useful (EPA 137280A1).

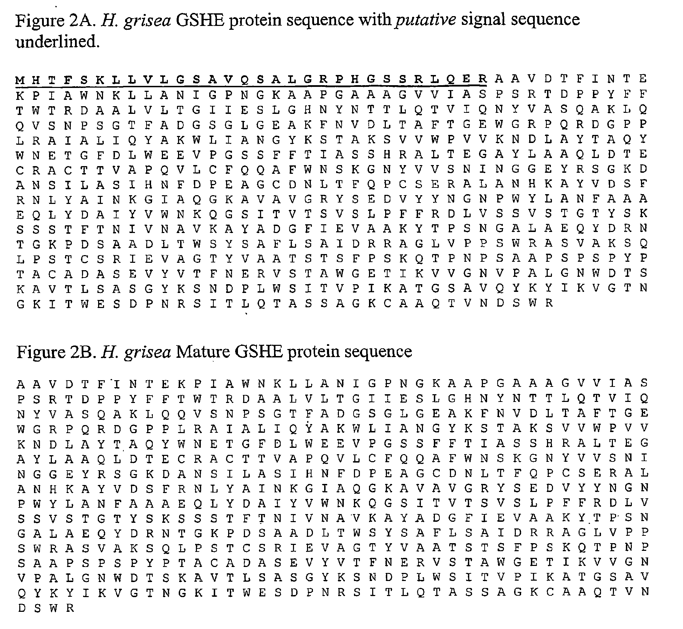

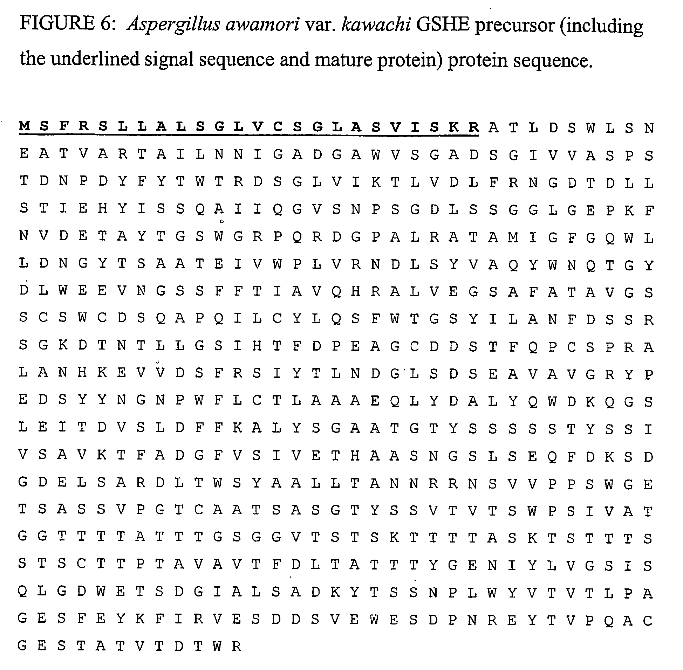

In some embodiments, the GSHE coding sequence is operably linked to a signal sequence. The DNA encoding the signal sequence is preferably that which is naturally associated with the GSHE gene to be expressed. Preferably, the signal sequence is encoded by a *Humicola grisea* or *Aspergillus awamori* gene which encodes a GSHE. More preferably the signal sequence has at least 90%, at least 95%, at least 97%, and at least 99% sequence identity to the signal sequence depicted in Figure 2A and 6A. In additional embodiments, a signal sequence and a promoter sequence comprising a DNA construct or vector to be introduced into a fungal host cell are derived from the same source. For example, in some embodiments, the signal sequence is the *cdh*1 signal sequence which is operably linked to a *cdh*1 promoter.

In some embodiments, the expression vector also includes a termination sequence. In one embodiment, the termination sequence and the promoter sequence are derived from the same source. In another embodiment, the termination sequence is homologous to the host cell. A particularly suitable terminator sequence is *cbh1* derived from a *Trichoderma* strain and particularly *T. reesei.* Other useful fungal terminators include the terminator from *A. niger* or *A. awamori* glucoamylase gene (Nunberg *et al.* (1984) *supra,* and Boel *et al.,* (1984) *supra).*

In some embodiments, an expression vector includes a selectable marker. Examples of preferred selectable markers include ones which confer antimicrobial resistance (e.g., hygromycin and phleomycin). Nutritional selective markers also find use in the present invention including those markers known in the art as *amd*S, *arg*B and *pyr4.* Markers useful in vector systems for transformation of *Trichoderma* are described in Finkelstein, chapter 6 in BIOTECHNOLOGY OF FILAMENTOUS FUNGI, Finkelstein et al. Eds. Butterworth-Heinemann, Boston, MA (1992), Chap. 6. and Kinghorn et al. (1992) APPLIED MOLECULAR GENETICS OF FILAMENTOUS FUNGI, Blackie Academic and Professional, Chapman and Hall, London). In a preferred embodiment, the selective marker is the *amd*S gene, which encodes the enzyme acetamidase allowing transformed cells to grow on acetamide as a nitrogen source. (*See,* Kelley et al., (1985) EMBO J. 4:475-479 and Penttila et al., (1987) Gene 61:155 - 164).

An expression vector comprising a polynucleotide encoding a GSHE may be any vector which is capable of replicating autonomously in a given fungal host organism or of integrating into the DNA of the host. In some embodiments, an expression vector is a plasmid. In preferred embodiments, two types of expression vectors for obtaining expression of genes are contemplated.

The first expression vector comprises DNA sequences in which the promoter, GHSE coding region, and terminator all originate from the gene to be expressed. In some embodiments, gene truncation is obtained by deleting undesired DNA sequences (*e.g.*, coding for unwanted domains) to leave the domain to be expressed under control of its own transcriptional and translational regulatory sequences.

The second type of expression vector is preassembled and contains sequences required for high-level transcription and a selectable marker. In some embodiments, the coding region for a GSHE gene or part thereof is inserted into this general-purpose expression vector such that it is under the transcriptional control of the expression constructs promoter and terminator sequences. In some embodiments, genes or part thereof are inserted downstream of the strong *cbh*1 promoter.

Methods used to ligate a vector comprising a polynucleotide encoding a GSHE, a promoter, a terminator and other sequences and to insert them into a suitable vector are well known in the art. Linking is generally accomplished by ligation at convenient restriction sites. If such sites do not exist, the synthetic oligonucleotide linkers are used in accordance with conventional practice. (*See*, Sambrook (1989) *supra,* and Bennett and Lasure, MORE GENE MANIPULATIONS IN FUNGI, Academic Press, San Diego (1991) pp 70 - 76.). Additionally, vector can be constructed using known recombination techniques (e.g. Invitrogen Life Technologies, Gateway Technology).

Where it is desired to obtain a fungal host cell having one or more inactivated genes known methods may be used (See, US Patent No. 5,246,853; US Patent No. 5,475,101 and WO 92/06209). Gene inactivation may be accomplished by complete or partial deletion, by insertional inactivation or by any other means which renders a gene nonfunctional for its intended purpose (such that the gene is prevented from expression of a functional protein). Any gene from a *Trichoderma* sp. or other filamentous fungal host, which has been cloned can be deleted, for example *cbh*1, *cbh*2, *eg*/1 and *eg*/2. In some embodiments, gene deletion is accomplished by inserting a form of the desired gene to be inactivated into a plasmid by known methods. The deletion plasmid is then cut at an appropriate restriction enzyme site (s), internal to the desired gene coding region and the gene coding sequence or part thereof is replaced with a selectable marker. Flanking DNA sequences from the locus of the gene to be deleted (preferably about between 0.5 to 2.0 kb) remain on either side of the marker gene. An appropriate deletion plasmid will generally have unique restriction enzyme sites present therein to enable the fragment containing the deleted gene, including the flanking DNA sequences and the selectable marker gene to be removed as a single linear piece.

Introduction of a DNA construct or vector into a host cell includes techniques such as transformation; electroporation; nuclear microinjection; transduction; transfection, including lipofection mediated and DEAE-Dextrin mediated transfection; incubation with calcium phosphate DNA precipitate; high velocity bombardment with DNA-coated microprojectiles; and protoplast fusion. General transformation techniques are taught in Ausubel et al., (1987), *supra* chapter 9 and Sambrook (1989) *supra.* More specifically methods of transformation for filamentous fungi are disclosed in Campbell et al., (1989) Curr. Genet. 16:53-56. Specifically, to effect the expression of heterologous protein in *Trichoderma* reference is made to USP 6,022,725; USP 6,268,328; Harkki et al. (1991); Enzyme Microb. Technol. 13:227-233; Harkki et al., (1989) Bio Technol. 7:596-603; EP 244,234; and EP 215,594. Reference is also made to Nevalainen et al., "The Molecular Biology of Trichoderma and its Application to the Expression of Both Homologous and Heterologous Genes", in MOLECULAR INDUSTRIAL MYCOLOGY, Eds. Leong and Berka, Marcel Dekker Inc., NY (1992) pp. 129 - 148. Reference is also made to Cao et al., (2000) Sci.9:991 - 1001 for transformation of *Aspergillus* strains.

Preferably genetically stable transformants may be constructed with vector systems whereby the nucleic acid encoding GSHE is stably integrated into a host strain chromosome. Transformants may then be purified by known techniques.

In one nonlimiting example, stable transformants including an *amd*S marker are distinguished from unstable transformants by their faster growth rate and the formation of circular colonies with a smooth, rather than ragged outline on solid culture medium containing acetamide. Additionally, in some cases a further test of stability is conducted by growing the transformants on solid non-selective medium (i.e. lacking acetamide), harvesting spores from this culture medium and determining the percentage of these spores which will subsequently germinate and grow on selective medium containing acetamide. Alternatively, other methods known in the art may be used to select transformants.

In one specific embodiment, the preparation of *Trichoderma sp.* for transformation involves the preparation of protoplasts from fungal mycelia. (See, Campbell et al.,(1989) Curr. Genet. 16:53-56). In some embodiments, the mycelia are obtained from germinated vegetative spores. The mycelia are treated with an enzyme that digests the cell wall resulting in protoplasts. The protoplasts are then protected by the presence of an osmotic stabilizer in the suspending medium. These stabilizers include sorbitol, mannitol, potassium chloride, magnesium sulfate and the like. Usually the concentration of these stabilizers varies between 0.8 M and 1.2 M. It is preferable to use about a 1.2 M solution of sorbitol in the suspension medium.

Uptake of DNA into the host *Trichoderma sp.* strain is dependent upon the calcium ion concentration. Generally between about 10 mM $CaCl_2$ and 50 mM $CaCl_2$ is used in an uptake solution. Besides the need for the calcium ion in the uptake solution, other items generally included are a buffering system such as TE buffer (10 Mm Tris, pH 7.4; 1 mM EDTA) or 10 mM MOPS, pH 6.0 buffer (morpholinepropanesulfonic acid) and polyethylene glycol (PEG). It is believed that the polyethylene glycol acts to fuse the cell membranes thus permitting the contents of the medium to be delivered into the cytoplasm of the *Trichoderma sp.* strain and the plasmid DNA is transferred to the nucleus. This fusion frequently leaves multiple copies of the plasmid DNA tenderly integrated into the host chromosome.

Usually a suspension containing the *Trichoderma sp.* protoplasts or cells that have been subjected to a permeability treatment at a density of $10^5$ to $10^7$/mL, preferably 2 x $10^6$/mL are used in transformation. A volume of 100 $\mu$L of these protoplasts or cells in an appropriate solution (*e.g.*, 1.2 M sorbitol; 50 mM $CaCl_2$) are mixed with the desired DNA. Generally a high concentration of PEG is added to the uptake solution. From 0.1 to 1 volume of 25% PEG 4000 can be added to the protoplast suspension. However, it is preferable to add about 0.25 volumes to the protoplast suspension. Additives such as dimethyl sulfoxide, heparin, spermidine, potassium chloride and the like may also be added to the uptake solution and aid in transformation. Similar procedures are available for other fungal host cells. See, for example, U.S. Patent Nos. 6,022,725 and 6,268,328, the contents of which are hereby incorporated by reference.

Generally, the mixture is then incubated at approximately 0°C for a period of between 10 to 30 minutes. Additional PEG is then added to the mixture to further enhance the uptake of the desired gene or DNA sequence. The 25% PEG 4000 is generally added in volumes of 5 to 15 times the volume of the transformation mixture; however, greater and lesser volumes may be suitable. The 25% PEG 4000 is preferably about 10 times the volume of the transformation mixture. After the PEG is added, the transformation mixture is then incubated either at room temperature or on ice before the addition of a sorbitol and $CaCl_2$ solution. The protoplast suspension is then further added to molten aliquots of a growth medium. This growth medium permits the growth of transformants only. One skilled in the art is well aware that similar procedures and methods may be used to transform host cells and heterologously express other enzymes such as starch hydrolyzing enzymes in the host cells.

Cell culture:

Appropriate host cells are generally cultured in a standard medium containing physiological salts and nutrients, such as described in Pourquie, J. et al., BIOCHEMISTRY AND GENETICS OF CELLULOSE DEGRADATION, eds. Aubert, J. P. et al., Academic Press, pp. 71-86, 1988 and Ilmen, M. et al., (1997) Appl. Environ. Microbiol. 63:1298-1306. Also reference is made to common commercially prepared media such as Yeast Malt Extract (YM) broth, Luria Bertani (LB) broth and Sabouraud Dextrose (SD) broth.

Culture conditions are also standard, *e.g.*, cultures are incubated at approximately 28°C in appropriate media in shaker cultures or fermenters until desired levels of GSHE expression are achieved. Preferred culture conditions for a given filamentous fungus may be found in the scientific literature and/or from the source of the fungi such as the American Type Culture Collection and Fungal Genetics Stock Center (www.FGSC.net).

After fungal growth has been established, the cells are exposed to conditions effective to cause or permit the expression of a starch hydrolyzing enzymes and particularly a GSHE as defined herein. In cases where a GSHE coding sequence is under the control of an inducible promoter, the inducing agent, *e.g.*, a sugar, metal salt or antibiotics, is added to the medium at a concentration effective to induce GSHE expression.

Identification of GSHE Activity:

In order to evaluate the expression of a starch hydrolyzing enzyme by a cell line that has been transformed with a heterologous polynucleotide encoding the starch hydrolyzing enzyme e.g. a GSHE, assays can be carried out at the protein level, the RNA level or by use of functional bioassays particular to glucoamylase activity and/or production.

In general, assays employed to analyze the expression of a GSHE include, Northern blotting, dot blotting (DNA or RNA analysis), RT-PCR (reverse transcriptase polymerase chain reaction), or *in situ* hybridization, using an appropriately labeled probe (based on the nucleic acid coding sequence) and conventional Southern blotting and autoradiography.

In addition, the production and/or expression of a starch hydrolyzing enzyme may be measured in a sample directly, for example, by assays directly measuring reducing sugars such as glucose in the culture media and by assays for measuring glucoamylase activity, expression and/or production. For example, substrates useful for assaying GSHE activity include granular starch substrates. For example, glucose concentration may be determined by any convenient method such as by using glucose reagent kit No 15-UV (Sigma Chemical Co.) or an instrument such as Technicon Autoanalyzer. Also reference is made to glucose oxidase kits and glucose hexose kits commercially available from Instrumentation Lab. (Lexington, MA). Glucoamylase activity may be assayed by the 3,5-dinitrosalicylic acid (DNS) method (See, Goto et al., (1994) Biosci. Biotechnol. Biochem. 58:49 - 54). In one nonlimiting example, a rGSHE has the ability to hydrolyze granular starch in a 15% starch solids suspension in water to a solution of saccharides of at least 90%, 95% and 97% wt glucose, dry substance basis.

In addition, protein expression, may be evaluated by immunological methods, such as immunohistochemical staining of cells, tissue sections or immunoassay of tissue culture medium, *e.g.*, by Western blot or ELISA. Such immunoassays can be used to qualitatively and quantitatively evaluate expression of a starch hydrolyzing enzyme. The details of such methods are known to those of skill in the art and many reagents for practicing such methods are commercially available.

Exemplary assays include ELISA, competitive immunoassays, radioimmunoassays, Western blot, indirect immunofluorescent assays and the like. In general, commercially available antibodies and/or kits may be used for the quantitative immunoassay of the expression level of a GSHE.

In an embodiment of the invention, the GSHE expressed by a recombinant *Trichoderma* host will be greater than 1 gram protein per liter (g/L) of culture media. In some embodiments the amount of GSHE expressed by a recombinant *Trichoderma* host will be greater than 2 g/L of culture media. In other embodiments the amount of GSHE expressed by a recombinant *Trichoderma* host will be greater than 5 g/L of culture media. Yet in other embodiments the amount of GSHE expressed by a recombinant *Trichoderma* host will be greater than 10 g/L of culture media. The amount of expressed GSHE may in some instances be greater than 20 g/L, greater than 25 g/L, greater than 30g/L and greater than 50 g/L of culture media.

Methods for Purifying Starch Hydrolyzing Enzymes:

In general, a starch hydrolyzing enzyme (e.g., nGSHE or rGSHE) produced in cell culture is secreted into the medium and may be purified or isolated, *e.g.,* by removing unwanted components from the cell culture medium. In some cases, a GSHE may be produced in a cellular form necessitating recovery from a cell lysate. In such cases the enzyme is purified from the cells in which it was produced using techniques routinely employed by those of skill in the art. Examples include, but are not limited to, affinity chromatography (Tilbeurgh et al., (1984) FEBS Lett. 16:215); ion-exchange chromatographic methods (Goyal et al., (1991) Biores. Technol. 36:37; Fliess et al., (1983) Eur. J. Appl. Microbiol. Biotechnol. 17:314; Bhikhabhai et al., (1984) J. Appl. Biochem. 6:336; and Ellouz et al., (1987) Chromatography 396:307), including ion-exchange using materials with high resolution power (Medve et al., (1998) J. Chromatography A 808:153; hydrophobic interaction chromatography (Tomaz and Queiroz, (1999) J. Chromatography A 865:123; two-phase partitioning (Brumbauer, et al., (1999) Bioseparation 7:287); ethanol precipitation; reverse phase HPLC; chromatography on silica or on a cation-exchange resin such as DEAE; chromatofocusing; SDS-PAGE; ammonium sulfate precipitation; and gel filtration using, *e.g.*, Sephadex G-75.

Process Conditions:

The rice substrate, preferably in slurry form, is contacted or incubated with the starch hydrolyzing enzymes to hydrolyze the granular starch of the rice substrate. The GSHE may be supplied in a cell free extract (such that the GSHE is isolated from a culture medium) or supplied in the culture medium (fermentation broth), which includes fungal cells that express and secrete GSHE.

In some embodiments, a GSHE may be added to a composition comprising a rice substrate in an amount of between about 0.001 to 15.0 GSHE Units (U) /g ds of the slurry adjusted to 10 - 55% dry solids. In other embodiments, a GSHE may be added to a compositions comprising a rice substrate in an amount of 0.01 to 10.0 GSHE Units (U)/g starch dry solids (ds) of a slurry adjusted to 10 - 55% dry solids. In some embodiments, the GSHE is added in an amount of between about 0.01 and 5.0 GSHE U/g of such solution. In other embodiments, the GSHE is added in an amount of between about 0.01 and 2.0 GSHE U/g of such solution. In some embodiments, the GSHE is added in an amount of between about 0.01 and 1.5 GSHE U/g of such solution. Also in other embodiments, the GSHE is added in an amount of between about 0.05 and 1.5 GSHE U/g of such solution and also between about 0.1 and 1.0 GSHE U/g.

In some preferred embodiments, the GSHE will have glucoamylase activity and the second starch hydrolyzing enzyme will be an alpha amylase. As understood by those in the art, the quantity of alpha amylase used in the methods of the present invention will depend on the enzymatic activity of the alpha amylase. In general, an amount of about 0.001 to 5.0 kg of the alpha amylase is added to a metric ton (MT) of the rice substrate. In some embodiments, an amount of 0.01 to 5.0 kg of the alpha amylase is added to a metric ton (MT) of the rice substrate. Although in some embodiments the alpha amylase is added in an amount about 0.05 to 4.0 kg per MT. In other embodiments, the alpha amylase is added in an amount of about 0.1 to 2.5 kg per MT and also about 0.5 to 1.5 kg per MT. In further embodiments, other quantities are utilized. For example, generally an amount of between about 0.01 to 1.5 kg of GZYME G997 or SPEZYME FRED (Genencor International Inc.) is added to a MT of starch. In other embodiments, the enzyme is added in an amount between about 0.05 to 1.0 kg; between about 0.1 to 0.6 kg; between about 0.2 to 0.6 kg and between about 0.4 to 0.6 kg of GZYME G997 or SPEZYME FRED per MT of starch.

In some embodiments, a GSHE will be added with an alpha amylase to the rice substrate for incubation essentially simultaneously. However, in other embodiments the GSHE and alpha amylase are added sequentially, but in general the hydrolyzing enzymes will be added within about 1 to 60 minutes of each other and also within about 1 to 30 minutes of each other.

In some embodiments, the ratio of alpha amylase units to GSHE units (alpha amylase:GSHE) encompassed by the methods of the invention will be in the range of 15:1 to 1:15 and in some embodiments in the range of 10:1 to 1:10. In other embodiments, the ratio will be in the range of 5:1 to 1:5 and in further embodiments, the alpha amylase: GSHE will be 4:1 to 1:4. In preferred embodiments the ratio will be about 2:1 to 1:4 and most preferably about 2:1 to 1:2.

In some embodiments, the mixture including the rice substrate and the hydrolyzing enzymes are incubated at a temperature equal to or below the denaturation temperature of the proteins comprising the rice substrate. In some embodiments, the temperature is below about 72°C, 70°C, 68°C, 65°C, 63°C, 60°C, 58°C, 55°C, 50°C, 45°C, and 40°C but not less than 10°C. In other embodiments, the process is conducted at a temperature of between about 70°C and 50°C. In further embodiments, the process is conducted at a temperature of between about 70°C to 55°C and also between about 65°C to 55°C.

In some embodiments, the mixture including the rice substrate and the starch hydrolyzing enzymes is incubated at a pH in the range of about pH 3.0 to pH 6.5; also in the range of about pH 3.0 to pH 6.0; in the range of about pH 3.0 to pH 5.5; in the range of about pH 3.5 to pH 5.0; in the range of about pH 3.0 to pH 4.0; in the range of about pH 4.5 to 6.5, and in the range of about pH 5.0 to 6.0.

In some embodiments, the mixture including the rice substrate and starch hydrolyzing enzymes (and preferably a GSHE and an alpha amylase) incubated at a temperature and pH as indicated above, are incubated for a period of time of about 2 to 100 hours, about 5 to 100 hours, about 10 to 100 hours, about 5 to 50 hours, about 10 to 50 hours, and about 10-24 hours.

In some embodiments, at least 60%, 65%, 70%, 75%, 80%, 85%, 90%, 94%, 95%, 96%, 97%, 98% and 99% of the dry solids of the rice substrate are converted into a solublized starch hydrolysate. In some embodiments, the dry solids of the rice substrate are completely solublized. Preferably, the soluble starch hydrolysate is glucose and most preferably the yield of glucose as a percent of the total solublized dry solids is at least about 90%, 91%, 92%, 93%, 94%, 95%, 95.5%, 96%, 96.5%, 97%, 97.5%, 98%, 98.5%, 99% and 99.5%.

In certain embodiments, at least 80%, 85% and 90% of the granular starch of the rice substrate is solubilized and hydrolyzed in a time period of 24 hours. In other embodiments, at least 95% of the granular starch of the rice substrate is solublized and hydrolyzed in a time period of 24 hours. In yet other embodiments, at least 98% of the granular starch of the rice substrate is solublized and hydrolyzed in a time period of 24 hours.

In some embodiments, the composition including the rice substrate and starch hydrolyzing enzymes (e.g. an alpha amylase and GSHE) will be incubated at a pH of between about 5.0 to 6.0 for a sufficient time period (for example, between 2 and 96 hours). In some embodiments, the pH of the incubated slurry will be lowered to a pH of about 3.0 to 4.0. This lowering of the pH causes termination of the enzyme reaction on the rice substrate.

After a sufficient incubation time period, a fraction, comprising the solublized rice starch hydrolysate, is separated from the incubated slurry leaving a residue, which comprises a substantially insoluble rice protein, concentrate. One skilled in the art is well aware of methods to accomplish separation. In general, some of these separation methods include centrifugation; conventional filtration methods and membrane separation processes.

The protein content (N x 5.95) of the residue comprising the rice protein concentrate is greater than 10%, 20%, 30%, 40% and 50%. In some embodiments, the protein content of the rice protein concentrate is in the range of about 10% to 60%; in the range of about 10% to 50%, in the range of about 20% to 45%, and in the range of about 30% to 40%.

In other embodiments, a high-purity rice protein concentrate will be obtained. In some embodiments, the high-purity rice protein concentrate is obtained by a second enzymatic hydrolysis step whereby the residue, which includes the substantially insoluble rice protein concentrate and which is obtained from the first enzymatic hydrolysis is further incubated for a period of time and at a temperature and pH as indicated above to hydrolyze remaining granular or insoluble starch. In some embodiments, the enzyme hydrolysis of starch remaining in the residue will be terminated by lowering the pH to a value lower than the pH of the incubation, for example from pH 5.5 to a pH in the range of pH 3.0 - 4.0, at a temperature of about 55°C to 60°C. The soluble rice starch hydrolysate will then be separated from the residue as described above to obtain a high-purity rice protein concentrate.

In this embodiment, the same starch hydrolyzing enzymes may be used as described above. In a preferred embodiment, at least one of the starch hydrolyzing enzymes will be a GSHE. In other preferred embodiments, a GSHE may be used in combination with an alpha amylase, and in other preferred embodiments, a GSHE may be used in combination with a glucoamylase. However, neither the first nor second enzymatic hydrolysis of the process is limited to the use of only these enzymes. Other enzymes may be used in the process and these include but are not limited to cellulases, pectinases, pullulanases and beta glucanases.

The protein content (N x 5.95) of the high-purity rice protein concentrate is generally greater than 60%, 63%, 65%, 68%, 70% and 75%. In some embodiments, the high-purity rice protein concentrate will have a protein content of about 65% or greater and also about 70% or greater.

The rice protein concentrate or high-purity rice protein concentrate obtained in accordance with the process may be dried using conventional and well-known techniques, e.g., vacuum drying, spray drying and freeze drying. In some embodiments, the moisture content of the rice protein concentrate obtained according to the invention will be below about 10%, 9%, 8%, 7%, 6%, 5%, 4%, 3% and 2%. In some embodiments, the obtained high-purity protein concentrate will be dried to a moisture content below 6%, 5%, 4%, 3% and also 2%. In some embodiments, the moisture content will be between about 2% to 5%.

The protein concentrate and high-purity protein concentrate obtained according to the methods herein may have improved characteristics over a protein fraction obtained by starch processing methods using conventional high temperature treatments. In some embodiments, the protein concentrate and high-purity protein concentrate include proteins having greater solubility at alkaline pH levels and particularly at pH levels of 10.0 as compared to the solubility of proteins in protein residues obtained from prior art processes used in starch processing. In some embodiments, the solubility at pH 10 will be at least 20%, at least 40% and at least 50%. In further embodiments, the protein concentrate and high-purity protein concentrate include proteins having greater solubility at acidic pH levels and particularly at pH levels of 2.0 as compared to the solubility of proteins in protein residues obtained from prior art processes used in starch processing. In some embodiments, the solubility at pH 2.0 will be at least 15%, at least 20%, at least 25% and at least 30%.

In yet other embodiments, the protein concentrate and high-purity protein concentrate obtained according to the invention will have an amino acid composition wherein the percent of certain amino acids will be increased as compared to the amino acid profile of the protein fraction of a residue obtained from prior art methods used in starch processing. For example in some embodiments, the amount of glutamic acid, valine, leucine, proline, methionine, arginine aspartic acid, or alanine will be greater in a protein concentrate obtained according to the invention.

## EXPERIMENTAL

The following examples are provided in order to demonstrate and further illustrate certain preferred embodiments and aspects of the present invention and are not to be construed as limiting the scope thereof. Indeed, it is contemplated that these teachings will find use in further optimizing the process systems described herein.

In the disclosure and experimental section which follows, the following abbreviations apply: H-GSHE (native *Humicola grisea* var. *thermoidea* GSHE); rH-GSHE (*Humicola grisea* var. *thermoidea* GSHE expressed in *Trichoderma reesei*); wt% (weight percent); °C (degrees Centigrade); rpm (revolutions per minute); $H_2O$ (water); $dH_2O$ and Di (deionized water); bp (base pair); kb (kilobase pair); kD (kilodaltons); gm (grams); $\mu$g (micrograms); mg (milligrams); ng (nanograms); $\mu$l (microliters); ml and mL (milliliters); mm (millimeters); nm (nanometers); $\mu$m (micrometer); M (molar); mM (millimolar); $\mu$M (micromolar); U (units); V (volts); MW (molecular weight); sec (seconds); min(s) (minute/minutes); hr(s) (hour/hours); MT (metric ton); PAGE (polyacrylamide gel electrophoresis); phthalate buffer (sodium phthalate in water, 20 mM, pH 5.0); SDS (sodium dodecyl sulfate); Tris (tris(hydroxymethyl)aminomethane); w/v (weight to volume); v/v (volume to volume); Genencor (Genencor International, Inc., Palo Alto, CA); Shin Nihon (Shin Nihon, Japan), HPLC (high pressure liquid chromatographic method; and ds (dry solid content).

General Methods:

Rice Substrates - White rice flour, Elephant Brand was purchased from Thai Better Foods, Co., Ltd. Bangpong, Thailand.

Total Protein Analysis - The total nitrogen content of the rice flour and rice protein preparation was determined by the Kjeldhal method (See Methods 22B608, American Association of Cereal Chemists (AACC) 1983, St Paul, MN). Protein content (%) was calculated using the mortification factor of 5.95 for total nitrogen (Juliano B. O. (1985) Rice: Chemistry and Technology; AACC, St. Paul MN).

Determination of Total Starch Content - The total starch content was determined by the enzyme-enzyme starch liquefaction and saccharification process. In a typical analysis, two grams (g) of the dry sample were taken in a 100 ml Kohlraucsh flask and 45 ml of MOPS buffer pH 7.0 was added. The slurry was stirred well for 30 min. 1.0 ml SPEZYME FRED (1:50 diluted in $H_2O$) was added and heated to boiling for 3 - 5 min. The flask was placed in an autoclave maintained at 121°C) for 15 min. After autoclaving, the flask was placed in a water bath maintained at 95°C and 1.0 ml of 1:50 diluted SPEZYME FRED was added and incubated for 45 min. The pH was adjusted to pH 4.2, the temperature was reduced to 60°C and then 20 ml acetate buffer pH 4.2 was added to the mixture. Saccharification was carried out by adding 1.0 ml of 1:100 diluted OPTIDEX L-400 (Genencor International, Inc.) and the incubation was continued for another 18 hours at 60°C. The enzyme reaction was terminated by heating at 95°C for 10 min. Total sugar composition was determined by HPLC analysis using glucose as a standard. The soluble starch hydrolysate from water extraction of the sample at room temperature without enzymatic treatment was subtracted from the total sugar.

Oligosaccharides Analysis - The composition of the reaction products of oligosaccharides was measured by HPLC (Beckman System Gold 32 Karat Fullerton, California, USA) equipped with a HPLC column (Rezex 8 u8% H, Monosaccharides), maintained at 50°C fitted with a refractive index (RI) detector (ERC-7515A, RI Detector from The Anspec Company, Inc.). Dilute sulfuric acid (0.01 N) was used as the mobile phase at a flow rate of 0.6 ml per minute. Twenty microliter of 4.0% solution was injected on to the column. The column separates based on the molecular weight of the saccharides. For example a designation of DP1 is a monosacchride, such as glucose; a designation of DP2 is a disaccharide, such as maltose; a designation of DP3 is a trisaccharide, such as maltotriose and the designation DP4[+] is an oligosaccharide having a degree of polymerization (DP) of 4 or greater.

Relative solubilization of the solids - A conventional low temperature jet cooking process was used to solublize the rice starch (See, U.S. Patent 3,912,590). The clear supernatant was used to measured the Brix (ABBE Refractometer, American Optical Corporation, Scientific Instrument Division, Buffalo, New York ). The Brix for the solublized starch from 30% rice flour slurry (300 grams rice flour in 700 g $dH_2O$) under a low temperature jet process was taken at 100% solubilization and used to calculate the percent relative solubilization of starch under different treatment conditions.

In a typical low temperature jet cooking experiment, 700g of distilled $H_2O$ were added to 300 g of white rice flour in a plastic beaker to make up a 30% ds rice flour slurry. The slurry was stirred and the pH adjusted to 6.0 using 6.0 N $H_2SO_4$. Alpha amylase from *Bacillus strearothermophilus* (G-zyme G997) (Genencor International Inc.) was added at a dosage of 0.8 kg/MT (w/w dss). The slurry was pumped through a heated coil at 105°C for 5 min and held in a covered Erlenmeyer flask partially submerged in a 95°C water bath for 2 hrs. Two ml of liquefact was transferred using a plastic pipette into a centrifuge tube and centrifuged at 8000 rpm for 3 min. The Brix value of the supernatant was 27.

Assuming 100% solubilization of rice starch by G-Zyme G997, a Brix value of 27 represents the reference Brix and was used to calculate relative solubilization of rice starch in the examples which follow.

$$RS = (Brix / Reference\ Brix) \times 100\%$$

where RS = relative solubilization; Brix = experimental (Expt) Brix and Reference Brix = Brix at 100% solubilization.

EXAMPLES

The present invention is described in further detail in the following examples which are not in any way intended to limit the scope of the invention.

EXAMPLE 1

Expression of Humicola grisea var. thermoidea GSHE in Trichoderma reesei (rH-GSHE).

Cloning the *H. grisea* var. *thermoidea* GSHE gene -

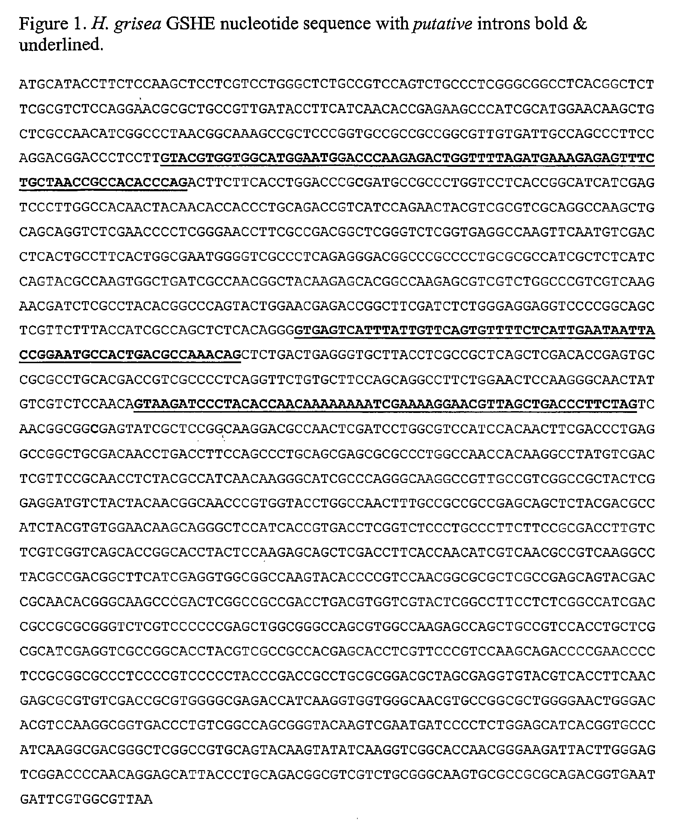

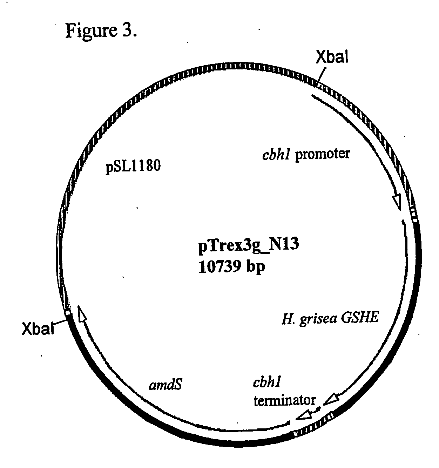

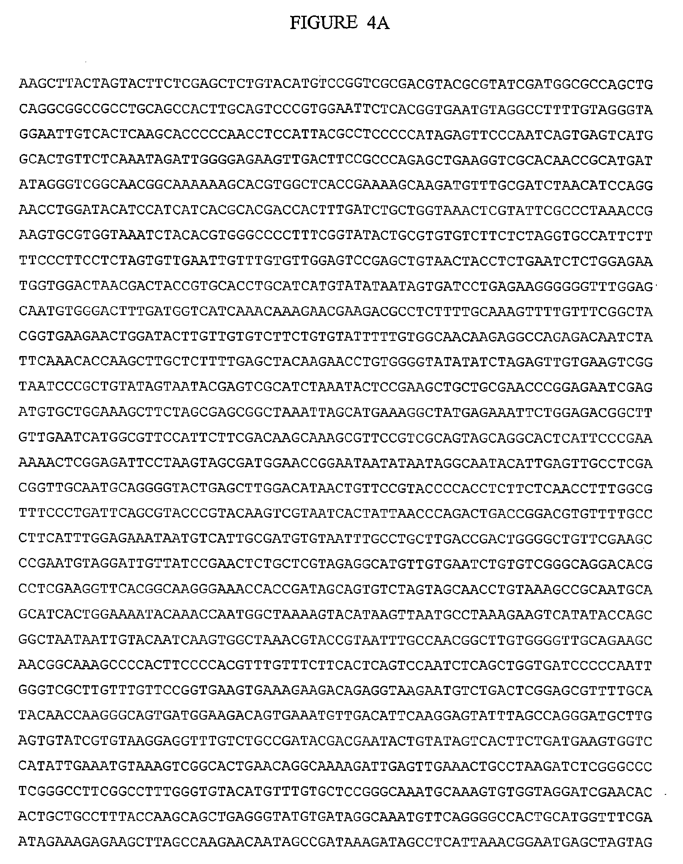

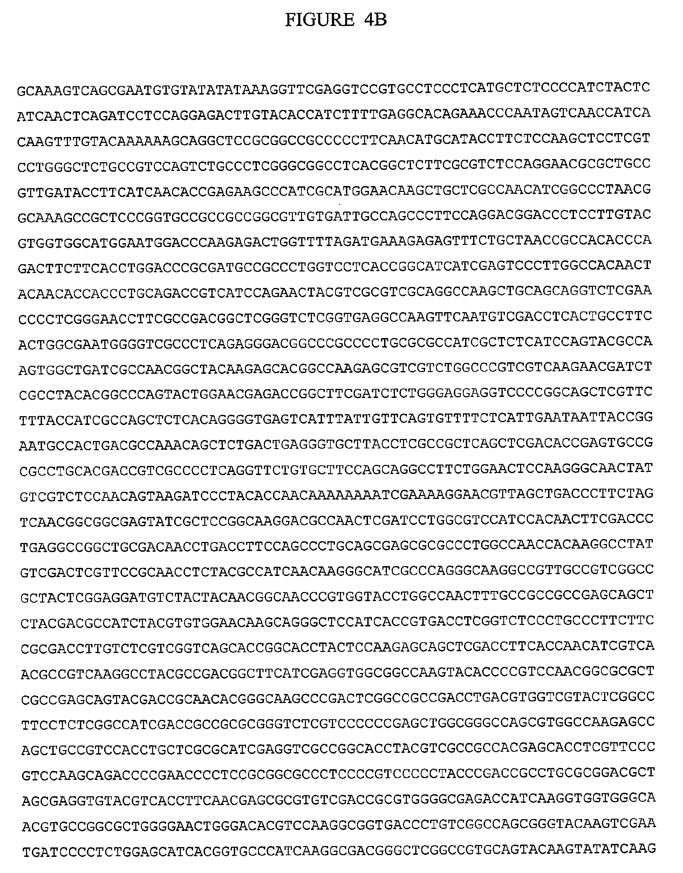

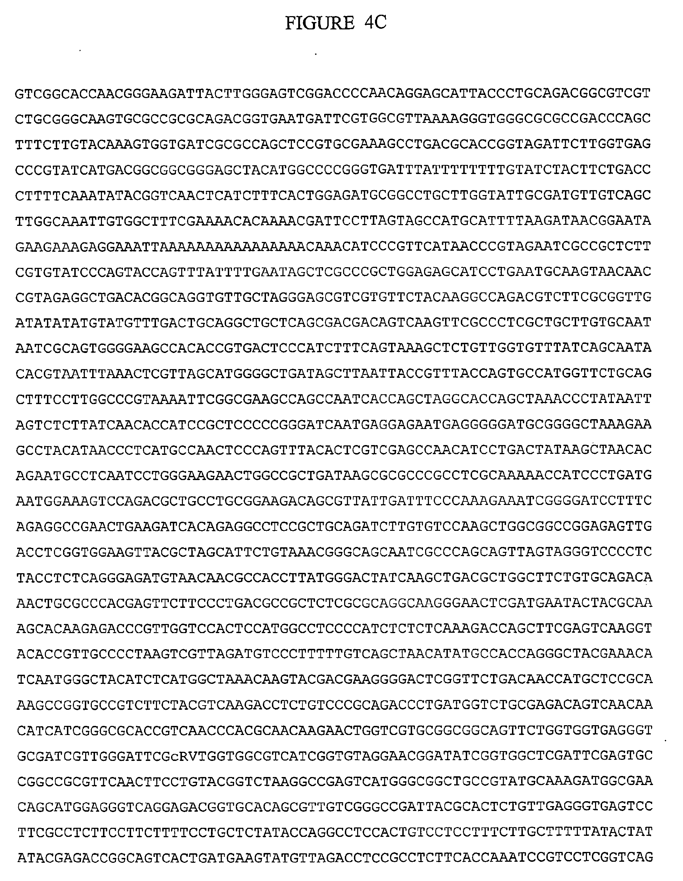

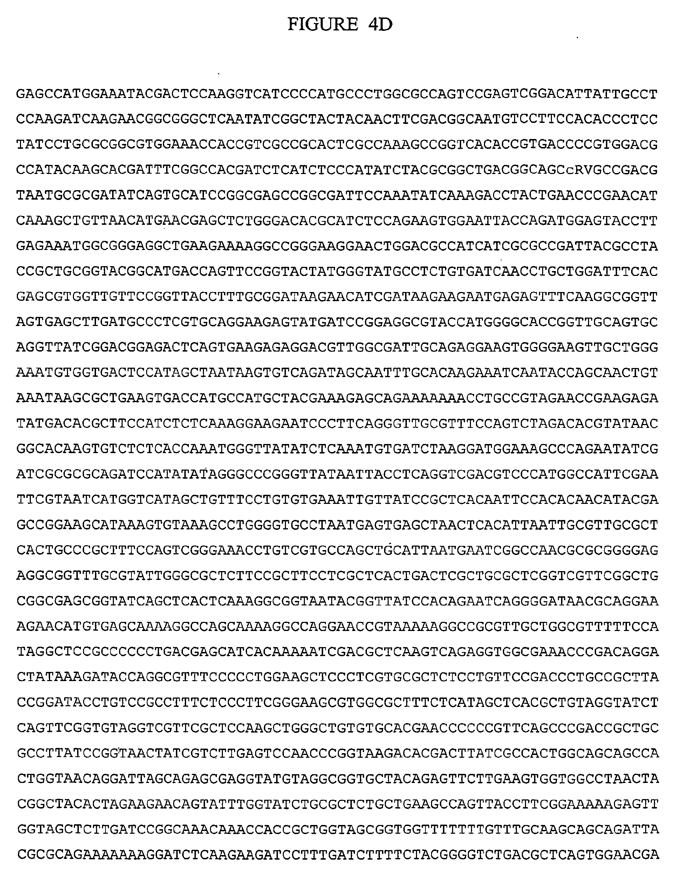

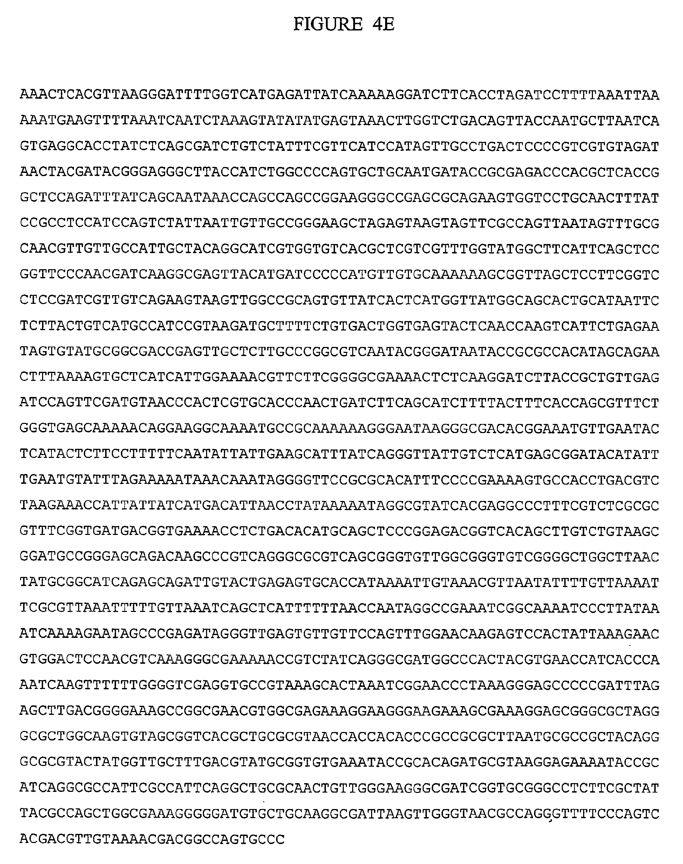

Genomic DNA (SEQ ID NO:1) was extracted from frozen *Scytalidium thermophilum* (ATCC 16453, anamorph, *H. grisea* var. *thermoidea*) mycelia. The frozen mycelia were ground with dry ice in a coffee grinder and the DNA was extracted by the EasyDNA protocol (Invitrogen). An extra chloroform/phenol/isoamyl alcohol extraction was added to the standard protocol. PCR primers were designed, based on the NCBI database accession number M89475. The forward primer contained a motif for directional cloning into the pENTR/D vector (Invitrogen).
The sequence of the RSH003f primer was
CAACATGCATACCTTCTCCAAGCTCCTC (SEQ ID NO:8) and the sequence of the RSH004r primer was TTAACGCCACGAATCATTCA CCGTC (SEQ ID NO:9).
The PCR product was cloned into pENTR/D, according to the Invitrogen Gateway system protocol. The vector was then transformed into chemically competent Top10 *E.coli* (Stratagene) with kanamycin selection. Plasmid DNA from several clones was restriction digested to confirm the correct size insert. The gla1 insert was sequenced (Sequetech, Mountain View, CA) from several clones. Plasmid DNA from one clone, pENTR/D_N13, was added to the LR clonase reaction (Invitrogen Gateway system) with pTrex3g/*amdS* destination vector DNA. Recombination, in the LR clonase reaction, replaced the CmR and *ccdB* genes of the destination vector with the *H. grisea gla1* from the pENTR/D vector.
This recombination was directionally inserted *gla1* between the *cbhl* promoter and terminator of the destination vector. Recombination site sequences of 48 and 50 bp remain upstream and downstream, respectively, of *gla1*. An aliquot of the LR clonase reaction was transformed into chemically competent Top10 *E.coli* and grown overnight with carbenicillin selection. Plasmid DNA from several clones was restriction digested to confirm the correct insert size. Plasmid DNA from clone, pTrex3g_N13 (Figures 3 and 4) was digested with *Xba1* to release the expression cassette including the *cbhl* promoter:*gla1*:*cbhl* and terminator:*amdS*. This 6.6 kb cassette was purified by agarose extraction and transformed into a strain of *T. reesei* derived from the publicly available strain QM6a, as further described below.
The cassette was sequenced by Sequetech, Mountain View, CA and the DNA for GSHE is illustrated in Figure 1 (SEQ ID NO:1) and the polypeptide sequence is illustrated in Figure 2 (SEQ ID NOs:2 and 3).

Transformation of *T. reesei* -

Approximately one-half swab (or 1 -2 cm$^2$) of a plate of sporulated mycelia (grown on a PDA plate for 5 days at 30°C) was inoculated into 50ml of YEG (5 g/L yeast extract plus 20 g/L glucose) broth in a 250ml, 4-baffled shake flask and incubate at 37°C for 16-20 hours at 200 rpm. The mycelia were recovered by transferring liquid volume into 50ml conical tubes and spinning at 2500 rpm for 10 min. The supernatant was aspirated off. The mycelial pellet was transferred into a 250ml, 0.22 m CA Corning filter bottle containing 40ml of β-glucanase solution and incubated at 30°C, 200rpm for 2 hours to generate protoplasts for transformation.
Protoplasts were harvested by filtration through sterile miracloth into a 50ml conical tube. They were pelleted by spinning at 2000 rpm for 5 minutes and aspirated. The protoplast pellet was washed once with 50ml of 1.2M sorbitol, spun down, aspirated, and washed with 25ml of sorbitol/CaCl$_2$. Protoplasts were counted and then pelleted at 2000 rpm for 5 min, the supernatant was aspirated off, and the protoplast pellet was resuspended in an amount of sorbitol/CaCl$_2$. sufficient to generate a protoplast concentration of 1.25 x 10$^8$ protoplasts per ml, generating a protoplast solution.
Aliquots of up to 20 μg of expression vector DNA (in a volume no greater than 20μl) were placed into 15ml conical tubes and the tubes were put on ice. Then 200μl of protoplasts were added along with 50μl PEG solution to each transformation aliquot. The tubes were mixed gently and incubated on ice for 20 minutes. PEG solution (2 ml) was added to the transformation aliquot tubes and these were incubated at room temperature for 5 minutes. Sorbitol/CaCl$_2$ (4 ml) was added to the tubes generating a total of 6.2 ml. The transformation mixture was divided into 3 aliquots each containing about 2ml. An overlay mixture was created by adding each of these three aliquots to three tubes of melted top agar (kept molten by holding at 50°C) and this overlay mixture was poured onto the transformation plates. The transformation plates were then incubated at 30°C for four to seven days.
The transformation was performed with *amdS* selection. Acetamide/sorbitol plates and overlays were used for the transformation. For the selection plates, the same plates are used, but without sorbitol. Transformants were purified by transfer of isolated colonies to fresh selective media containing acetamide.

With reference to the examples the following solutions were made as follows.

1) 40ml β-D-glucanase solution is made up in 1.2M sorbitol and includes 600 mg β-D-glucanase and 400mg MgSO$_4$ ˙7H$_2$0. (InterSpex Products Inc. San Mateo, CA).

2) 200 ml PEG mix contained 50g PEG 4000 (BDH Laboratory Supplies Poole, England) and 1.47g CaCl$_2$ ˙2H$_2$0 made up in dH$_2$O.

3) Sorbitol/ CaCl$_2$ contained 1.2M sorbitol and 50mM CaCl$_2$.

4) Acetamide/sorbitol agar:

Part 1 - 0.6g acetamide (Aldrich, 99% sublime.), 1.68g CsCl, 20g glucose, 20g KH$_2$PO$_4$ 0.6g MgSO$_4$˙7H$_2$O, 0.6g CaCl$_2$ ˙2H$_2$O, 1 ml 1000 x salts (see below), adjusted to pH 5.5, brought to volume (300ml) with dH$_2$O, filtered and sterilized.

Part II - 20g Noble agar and 218g sorbitol brought to volume (700ml) with dH$_2$O and autoclaved.

Part II was added to part I for a final volume of 1L.

5) 1000 x Salts - FeSO$_4$·7H$_2$O, 1.6g MnSO$_4$·H$_2$O, 1.4g ZnSO$_4$·7H$_2$O, 1 g CoCl$_2$˙6H$_2$O were combined and the volume was brought to 1 L with dH$_2$O. The solution was filtered and sterilized.

Fermentation of *T. reesei* transformed with the *H. grisea var. thermoidea* glucoamylase gene -

In general, the fermentation protocol as described in Foreman et al. (Foreman et al. (2003) J. Biol. Chem 278: 31988-31997) was followed. More specifically, duplicate fermentations were run for each of the strains. 0.8 L of Vogels minimal media (Davis et al., (1970) Methods in Enzymology 17A, pg 79 -143 and Davis, Rowland, Neurospora, Contributions of a Model Organism, Oxford University Press (2000)) containing 5% glucose was inoculated with 1.5 ml frozen spore suspension. After 48 hours, each culture was transferred to 6.2L of the same medium in a 14L Biolafitte fermenter. The fermenter was run at 25°C, 750 RPM and 8 standard liters per minute airflow. One hour after the initial glucose was exhausted, a 25% (w/w) lactose feed was started and fed in a carbon limiting fashion to prevent lactose accumulation. The concentrations of glucose and of lactose were monitored using a glucose oxidase assay kit or a glucose hexokinase assay kit with beta-galactosidase added to cleave lactose, respectively (Instrumentation Laboratory Co., Lexington, MA). Samples were obtained at regular intervals to monitor the progress of the fermentation. Collected samples were spun in a 50ml centrifuge tube at 3/4 speed in an Internal Equipment Company (Needham Heights, MA) clinical centrifuge.

Sample supernatants were run of 4 -12% Bis-Tris SDS PAGE gels, under reducing conditions with MOPS (morpholinepropane sulfonic acid) SDS running buffer and LDS sample buffer. A 68kD rGSHE band (data not shown) was observed at different time periods.

Assay of GSHE Activity from Transformed *Trichoderma reesei* Clones -

Enzyme activity - GSHE activity was determined as milligrams (mg) of reducing sugars released (measured as glucose equivalent) per minute (min) during an incubation of 5 ml of 10% granular cornstarch in a 0.1 M acetate buffer, pH 4.5, 50°C with an aliquot of the enzyme preparation.

Native GSHE (nGSHE) from *Humicola grisea* var. *thermoidea* and recombinant *Humicola grisea* var. *thermoidea* rGSHE produced from *T. reesei* were purified by standard techniques using hydrophobic interaction chromatography using phenyl-sepharose (Amersham Biosciences, Piscataway, NJ) followed by ion exchange chromatography using SP-sepharose (Amersham Biosciences, Piscataway, NJ). The recombinant GSHE initially expressed by *T. reesei* clones included two protein peak fractions in about equal concentrations. These peaks were labeled rGSHE1 and rGSHE2. The two peaks differed in mass by 1500D and by 0.3 pH units as measured by matrix assisted laser desorption and ionization (MALDI-TOF) on a Voyageur mass spectrometer (Applied Biosystems, Foster City, CA) and an isoelectric focusing gel (SERVA Electrophoresis, GmbH, Heidelberg, Germany) according to manufacturer directions. Both rGSHE1 and rGSHE2 have the same specific activity as measured by the raw starch hydrolyzing assay and protein measurements using a MicroBCA protein assay kit (Pierce, Rockland, IL) and the percent solution extinction coefficient (A280 0.1 % = 1.963). After a period of time, measured at approximately 72 hours after initial rGSHE expression, only one form of rGSHE is represented (rGSHE3). Reference is made to Table 1.

TABLE 1

| Source of GSHE | Specific Activity GSHE Units/mg | % total carbohydrate |
|---|---|---|
| Native GSHE | 9.0 | 1.12 |
| rGSHE1/rGSHE2 | 8.0/8.0 | 2.70 |
| rGSHE3 | 8.0 | 0.57 |

The % carbohydrate (CHO) of the GSHEs was determined by acid hydrolysis using 4N trifluoroacetic acid at 100°C for 5 hrs and measurements were made of the released reducing sugars using parahydroxybenzoic acid hydrazide. When initially expressed, the glycosylation of rGSHE1 and rGSHE2 was 2.70% of the total carbohydrate. However after 72 hours the level of glycosylation of rGSHE3 found in the medium was 0.57% total CHO. The level of glycosylation of native GSHE is 1.12%.

[1] The rGSHE obtained according to this example was used as a source of the recombinant GSHE in the following examples and is referred to as rH-GSHE.

Expression of the Aspergillus awamori var. kawachi GSHE in Trichoderma reesei -

Cloning the *Aspergillus awamori* var. *kawachi* GSHE gene which encodes the mature amino acid sequence as depicted in Figure 6 and transformation and transformation into *Trichoderma reesei* was accomplished in the same manner as described above.

Briefly, genomic DNA was extracted from frozen mycelia of a strain of *A. awamori* var. *kawachi* according to the methods described above. The primer sequences were designed based on the published sequence of the *A. awamori* var. *kawachi* glucoamylase (GAI) (Hayashida et al (1989) Agric. Biol. Chem. 53:923-929). The following primers were used:

the RSH10f primer having the sequence
CACCATGTCGTTCCGATCTCTTCTC (SEQ ID NO. 10),
which includes the Gateway (Invitrogen) directional cloning motif CACC and the RSH11 r primer having the sequence CTACCGCCAGGTGTCGGTCAC (SEQ ID NO. 11).

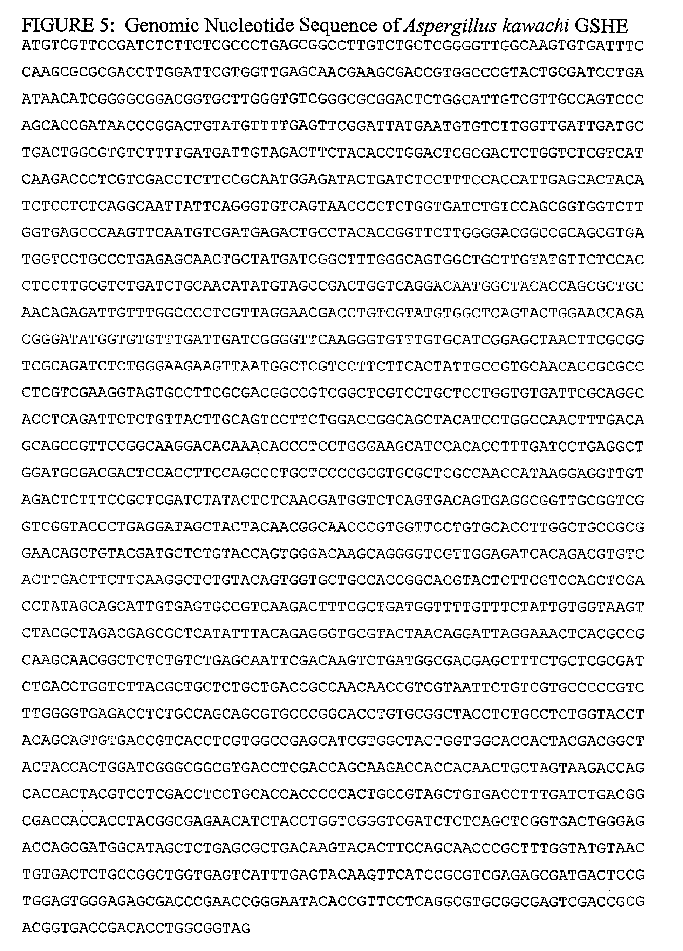

The DNA sequence is provided in Figure 5 (SEQ ID NO: 5). Vector construction and transformation of *T. reesei* proceeded as described above. The A-GSHE insert was sequenced by Sequetech Corp. (Mountain View, CA). Expression of rA-GSHE was determined as described above for expression of rH-GSHE. The level of expression was determined to be greater than 2g/L.

EXAMPLE 2

Solubilization of granular rice starch bv alpha amylases.

In a 1000 ml stainless steel container, 350 g dH$_2$O was added to 150 g white rice flour to make up a 30% ds rice flour slurry. The slurry was stirred and the pH was adjusted to 5.5 using 6N H$_2$SO$_4$. A stainless steel stirrer was placed into the container and a glass cover was placed on top. Before enzymes were added to the container, the container was placed in a 70°C water bath for 15 min. Alpha amylase from *Bacillus strearothermophilus* (G-zyme G997 from Genencor International, Inc) was compared to alpha amylase from *Bacillus licheniformis* (SPEZYME FRED from Genencor International, Inc) on the ability to solublize granular rice starch added at a dosage of 0.8 kg/MT (w/w dss). After enzyme addition, the suspensions were incubated with stirring at 70°C for 2 hrs followed by 60°C for 48 hrs. A 2 ml sample was taken from each container at a predetermined time interval using a plastic pipette and transferred to a centrifuge tube. The sample was centrifuged at 8000 rpm for 3 mins. The supernatant was withdrawn from the centrifuge tu be and a few drops were placed into a sample well of Lecia AR200 digital hand held refractometer. The Brix value was recorded and the relative solubilization (RS) was calculated. The results as depicted in Table 2 demonstrate that alpha amylase *B. strearothermophilus* (G-zyme G997) is more effective in solubilizing granular rice starch than alpha amylase from *B. licheniformis* (SPEZYME FRED).

TABLE 2

| Effect of Alpha Amylase on Solubilization of Granular Rice Starch at pH 5.5. 60°C | | | | | | |
|---|---|---|---|---|---|---|
| Enzyme | Relative Solubilization (%) | | | | | |
| | 2 hrs | 6hrs | 12hrs | 24hrs | 36hrs | 48hrs |
| G-zyme G997 | 20 | 31 | 40 | 48 | 53 | 59 |
| Spezyme Fred | 25 | 27 | 33 | 41 | 44 | 46 |

EXAMPLE 3

The Effect of G-zyme G997 Concentrations on Solubilization of granular rice starch.

Distilled $H_2O$ (350 g) was added to 150 g of white rice flour in a 1000 ml stainless steel container to make up a 30% ds rice flour suspension. The suspension was stirred and the pH was adjusted to pH 5.5 using 6N $H_2SO_4$. A stainless steel stirrer was placed into the container and a glass covered placed on top. The steel container with the suspension was placed into a 60°C water bath for 15 min before the alpha amylase was added. Three containers of suspension as described above were prepared. G-zyme G997 was added into each container at a dosage of 0.1, 0.25 and 0.5 kg/MT rice flour (ds). After enzyme addition, the suspensions were incubated at 60°C for 24 hours with stirring. A 2 ml sample was taken from each container at a pre-determined interval using a plastic pipette and transferred to a centrifuge tube. The samples were centrifuged at 8000 rpm for 3 min. A few drops of supernatant were then carefully withdrawn from the tube and the Brix was measured. The Brix value was recorded and the relative solubilization (RS) was calculated. The results, as depicted in Table 3 show no significant difference in the relative solubilization of granular rice starch when the dosage of G-zyme G997 is increased above 0.25 kg/MT rice flour (ds).

TABLE 3

| Effect of G-Zyme G997 Concentration on Solubilization of Granular Rice Starch at pH 5.5 and 60°C | | | | |
|---|---|---|---|---|
| G-Zyme G997 | Relative Solubilization (%) | | | |
| (kg/MT Rice Flour) | 2 hr | 6 hr | 17 hr | 23 hr |
| 0.10 | 25 | 37 | 51 | 54 |
| 0.25 | 31 | 43 | 55 | 59 |
| 0.50 | 35 | 47 | 58 | 60 |

EXAMPLE 4 - The Effect of rH-GSHE Concentration on Solubilization of granular rice starch.

Granular starch hydrolyzing enzyme (rH-GSHE) as described above in example 1 was added at various concentrations of GSHE U per gram rice flour in a 30% aqueous slurry with a pH adjusted to pH 5.5. The slurry was incubated at 60°C and samples were taken at different time intervals. The samples were centrifuged as described above and the clear supernatant was used for determining the Brix.

TABLE 4

| Effect of rH-GSHE Concentration on the Solubilization of Granular Rice Starch (30%, ds) at pH 5.5 and 60°C | | | | | |
|---|---|---|---|---|---|
| Relative Solubilization (%) | | | | | |
| GSHE units starch ds | 3 hr | 6 hr | 9 hr | 13 hr | 24 hr |
| 0.1 | 11.1 | 13.3 | 15.6 | 20.0 | 25.9 |
| 0.5 | 14.1 | 17.0 | 18.5 | 22.6 | 28.1 |
| 1.0 | 17.0 | 21.9 | 23.7 | 30.0 | 35.2 |

EXAMPLE 5

Effect of rH-GSHE on the solubilization of granular rice starch in the presence of 0.1 kg/MT rice flour (ds) and G-zyme G997.

Distilled $H_2O$ (350g) was added to 150 g of white rice flour in a 1000 ml stainless steel container to make up a 30% ds rice flour suspension. The suspension was stirred and the pH adjusted to 5.5 using 6N $H_2SO_4$. A stainless steel stirrer was placed in the container and a glass cover was placed on top of the contained. The steel container containing the suspension was placed into a 60°C water bath for 15 min before the enzymes were added.

Two containers of the suspension as described above were prepared. G-Zyme G997 was added to each container at a dosage of 0.1 kg/MT rice flour (ds) and rH-GSHE was added at a dosage of 0 and 1.0 GSHE units/g rice flour ds. After the enzyme addition, the suspensions were incubated at 60°C for 24 hours with stirring. A 2 ml sample was taken from each container at a pre-determined interval using a plastic pipette and transferred to a centrifuge tube. The tube with the sample was centrifuged at 8000 rpm for 3 min. A few drops of the supernatant were carefully withdrawn from the centrifuge tube and the Brix was measured. The Brix value was recorded and the relative solubilization (RS) was calculated. Another 0.5 ml supernatant was transferred to a test tube equipped with a screw cap. The tube was capped and placed into a boiling water bath for 15 minutes to inactivate the enzymes. The supernatant was diluted with distilled $H_2O$ so that the Brix was approximately 3. Each tube was mixed well and 2 ml of the contents were filtered through a 0.45 $\mu$m filter into an autosampler vial. Sugar profile of the supernatants was analyzed using HPLC.

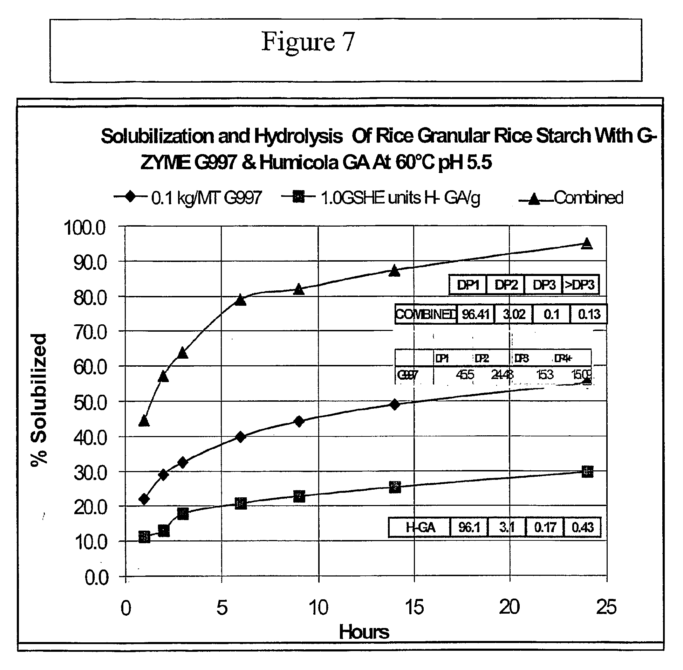

The results as depicted in Tables 5 and 6 demonstrate that rH-GSHE significantly increases the solubilization of granular rice starch to over 90% after only 24 hours in the presence of 0.1 kg/MT dss G-Zyme G997. Reference is also made to Figure 7, wherein the % solublized starch over time is compared for G-Zyme G997 alone, rH-GSHE alone and rH-GSHE and G-Zyme-G997 in combination. It is observed that after 20 hours over 90% of the granular starch is solublized when both rH-GSHE and G-Zyme-G997 are combined as compared to about 50% when G-Zyme G997 is used alone and about 28% when rH-GSHE is used alone. Additionally, rH-GSHE with G-Zyme G997 was able to produce a syrup with over 96% glucose after only 24 hours. However, the G-Zyme G997, alone, was neither able to solublize over 90% of the granular rice starch nor produce high glucose syrup.

TABLE 5

| Effect of rH-GSHE on solubilization of granular rice starch at pH 5.5 and 60°C in the presence of 0.1 kg/MT ds G-Zyme G997 | | | | | | |
|---|---|---|---|---|---|---|
| Treatment | Relative Solubilization (%) | | | | | |
| GSHU/g ds | 2 hr | 4 hr | 6 hr | 9 hr | 12 hr | 24 hr |
| without rH-GSHE | 26 | 35 | 39 | 47 | 51 | 55 |
| with rH-GSHE | 53 | 68 | 75 | 86 | 90 | 93 |

TABLE 6

| Effect of rH-GSHE on the sugar profile of solublized rice starch hydrolysate at pH 5.5 and 60°C in the presence of 0.1 kg/MT ds G-Zyme G997, 24 hr incubation | | | | |
|---|---|---|---|---|
| Enzyme | DP1 | DP2 | DP3 | DP4+ |
| G-Zyme G997 | 55.7 | 25.4 | 11.6 | 7.1 |
| G-Zyme G997 + rH-GSHE | 96.4 | 3.0 | 0.1 | 0.1 |

EXAMPLE 6

Effect of pH on the solubilization of granular rice starch in the presence of rH-GSHE and G-zyme G997.

Distilled $H_2O$ (350g) was added to 150 g of white rice flour (Elephant brand, Thai Better Foods, Co. Ltd., Bangpong, Thailand) in a 1000 ml stainless steel container to make up a 30% ds rice flour suspension. Four containers of such suspension described above were prepared. The pH was adjusted to pH 4.5, 5.0, 5.5, and 6.0 using 6N $H_2SO_4$ and/or 1 N NaOH. A stainless steel stirrer was placed into each container and a glass cover was placed on top of each container as a cover. The steel containers were placed into a 60°C water bath for 15 min before the enzymes were added.

rH-GSHE was added into each container at a dosage of 0.5 GSHE units/g rice flour and G-Zyme 997 was added at a dosage rate of 0.1 kg/MT rice flour. After enzyme addition, the suspensions were incubated at 60°C for 24 hours with stirring. A 2-ml sample was withdrawn from each container at a pre-determined interval using a plastic pipette and then transferred to a centrifuge tube. The sample was centrifuged at 8000 rpm for 3 min. A few drops of the supernatant were carefully withdrawn from the tube and the Brix was measured. The Brix value was recorded and the relative solubilization was calculated as illustrated in Table 7. The results illustrate there was no significant difference in solubilization of a granular rice starch at 60°C between pH 5.0 and 6.0, but the rate of Solubilization is significantly lower at pH 4.5.

TABLE 7

| Effect of pH on solubilization of granular rice starch at 60°C in the presence of 0.5GSHE Units/g ds rH-GSHE and 0.1 kg/MT rice flour ds G-Zyme G997 | | | | | | | |
|---|---|---|---|---|---|---|---|
| pH Treatment | Relative Solubilization (%) | | | | | | |
| | 1 hr | 2 hr | 4 hr | 6 hr | 9 hr | 12 hr | 24 hr |
| 4.5 | 30 | 40 | 52 | 59 | 62 | 67 | 76 |
| 5.0 | 32 | 46 | 58 | 66 | 72 | 76 | 85 |
| 5.5 | 33 | 46 | 59 | 67 | 73 | 78 | 86 |
| 6.0 | 33 | 47 | 58 | 66 | 73 | 76 | 87 |

EXAMPLE 7

Effect of temperature on the solubilization of granular rice starch in the presence of rH-GSHE and G-zyme G997 at pH 5.5.

Distilled $H_2O$ (350g) was added to150 g of white rice flour (Elephant brand, Thai Better Foods, Co. Ltd., Bangpong, Thailand) in a 1000 ml stainless steel container to make up a 30% ds rice flour suspension. The suspension was stirred and the pH was adjusted to pH 5.5 using 6N $H_2SO_4$. Four containers of such suspension described above were prepared. A stainless steel stirrer was placed into each container and a glass cover was placed on top of each container as a cover. The steel containers were placed into a 55°C, 60°C, 65°C and 70°C water bath for 15 min before the enzymes were added.

rH-GSHE was added into each container at a dosage of 1.0 GSHE units/g rice flour ds and G-Zyme 997 was added at a dosage rate of 0.1 kg/MT rice flour, ds. After enzyme addition, the suspensions were incubated for 24 hours with stirring. A 2-ml sample was withdrawn from each container at a pre-determined interval using a plastic pipette and then transferred to a centrifuge tube. The sample was centrifuged at 8000 rpm for 3 min. A few drops of the supernatant were carefully withdrawn from the tube and the Brix was measured. The Brix value was recorded and the relative solubilization was calculated as illustrated in Table 8. The results indicate 60°C is the optimum temperature at pH 5.5.

TABLE 8

| Effect of temperature on solubilization of granular rice starch at pH 5.5 in the presence of 1.0GSHE Units/g ds rH-GSHE and 0.1 kg/MT rice flour ds G-Zyme G997 | | | | | | |
|---|---|---|---|---|---|---|
| Temperature | Relative Solubilization (%) | | | | | |
| °C | 2 hr | 4 hr | 6 hr | 9 hr | 12 hr | 24 hr |
| 55 | 50 | 64 | 71 | 78 | 81 | 91 |
| 60 | 57 | 71 | 78 | 83 | 88 | 96 |
| 65 | 56 | 61 | 65 | 67 | 68 | 71 |
| 70 | 54 | 57 | 61 | 6 | 64 | 67 |

EXAMPLE 8

Effect of rH-GSHE concentrations on the solubilization of granular rice starch in the presence of 0.1 kg G Zyme G997/MT rice flour ds at pH 5.5 and 60°C.

Distilled $H_2O$ (350g) was added to 150 g of white rice flour (Elephant brand, Thai Better Foods, Co. Ltd., Bangpong, Thailand) in a 1000 ml stainless steel container to make up a 30% ds rice flour suspension. The suspension was stirred and the pH was adjusted to pH 5.5 using 6N $H_2SO_4$. A stainless steel stirrer was placed into the container and a glass cover was placed on top of the container as a cover. Six containers were prepared in this manner and placed into a 60°C water bath for 15 min before enzymes were added.

G-Zyme 997 was added to each container at a dosage rate of 0.1 kg/MT rice flour, ds and rH-GSHE was added at a dosage of 0, 0.5, 1.0, 1.5, 2.0 or 3.0 GSHE Units/g rice flour ds. After enzyme addition, the suspensions were incubated at 60°C for 24 hours with stirring. A 2-ml sample was withdrawn from each container at a pre-determined interval using a plastic pipette and then transferred to a centrifuge tube. The sample was centrifuged at 8000 rpm for 3 min. A few drops of the supernatant were carefully withdrawn from the tube and the Brix was measured. The Brix value was recorded and the relative solubilization (RS) was calculated as illustrated in Table 9. The results demonstrate a process for over 90% solubilization of the rice starch at a temperature of 60°C which results in a glucose yield greater than 95%. There is no significant difference in the % RS when the dosage of rH-GSHE is increased above 1.5 GSHE-Units/g ds. Over 90% hydrolysis of granular rice starch can be achieved with 0.1 kg G Zyme G997 MT/rice flour, ds and 1.5 GSHE Units of H-GSHE/g rice flour, ds.

TABLE 9

| rH-GSHE Conc | % RS | | | % Soluble Sugar (24 hrs) | | | |
|---|---|---|---|---|---|---|---|
| | 3.5 hrs | 15 hrs | 24 hrs | DP1 | DP2 | DP3 | DP4+ |
| 0 | 31 | 55 | 59 | 45.5 | 24.5 | 15.3 | 15.1 |
| 0.5 | 58 | 81 | 88 | 96.1 | 3.2 | 0.2 | 0.3 |
| 1.0 | 64 | 87 | 91 | 96.4 | 3.0 | 0.1 | 0.1 |
| 1.5 | 73 | 93 | 93 | 96.4 | 3.3 | 0.1 | 0.1 |
| 2.0 | 76 | 95 | 97 | 95.7 | 3.9 | 0.2 | 0.1 |
| 3.0 | 80 | 97 | 100 | 95.2 | 4.4 | 0.2 | 0.2 |

Effect of rH-GSHE Concentration (Conc) on the Solubilization and Hydrolysis During the Incubation with Rice Flour with G ZYME G997

EXAMPLE 9

Effect of G-Zyme G997 concentrations on the solubilization of granular rice starch in the presence of 0.5 GSHE Units/g rice flour, ds at pH 5.5 and 60°C.

Distilled $H_2O$ (350g) was added to150 g of white rice flour (Elephant brand, Thai Better Foods, Co. Ltd., Bangpong, Thailand) in a 1000 ml stainless steel container to make up a 30% ds rice flour suspension. The suspension was stirred and the pH was adjusted to pH 5.5 using 6N $H_2SO_4$. A stainless steel stirrer was placed into the container and a glass cover was placed on top of the container as a cover. Four containers were prepared in this manner and placed into a 60°C water bath for 15 min before enzymes were added.

rH-GSHE was added to each container at a dosage rate of 0.5 GSHE Units/g rice flour, ds and varying amounts of G-Zyme G997 was added at a dosage of 0.1, 0.25, 0.5 and 1.0 kg/MT rice flour ds. After enzyme addition, the suspensions were incubated at 60°C for 24 hours with stirring. A 2-ml sample was withdrawn from each container at a pre-determined interval using a plastic pipette and then transferred to a centrifuge tube. The sample was centrifuged at 8000 rpm for 3 min. A few drops of the supernatant were carefully withdrawn from the tube and the Brix was measured. The Brix value was recorded and the relative solubilization (RS) was calculated as illustrated in Table 10.

The results demonstrate that increasing the dosage of G-Zyme G997 has a positive effect on RS of granular rice starch in the presence of 0.5 H-GSHE, and over 90% RS of granular rice starch could be achieved with 0.5 G-Zyme G997 MT/rice flour, ds.

TABLE 10

| Effect of G-ZYME G997 Concentration (Conc) on the Solubilization of Granular Rice Flour with rH-GSHE (0.5 GSHE Units/g rice flour, ds) | | | | | |
|---|---|---|---|---|---|
| G-Zyme G997 (kg/MT rice flour, ds | % Relative Solubilization (RS) | | | | |
| | 2 hrs | 6 hrs | 17 hrs | 23 hrs | 25 hrs |
| 0.10 | 43 | 64 | 83 | 87 | 88 |
| 0.25 | 45 | 67 | 84 | 87 | 87 |
| 0.5 | 58 | 74 | 86 | 90 | 91 |
| 1.0 | 58 | 74 | 87 | 90 | 94 |

EXAMPLE 10

Effect of rice flour concentration on the solubilization and hydrolysis of granular rice starch during incubation with G-Zyme G997 and different concentrations of rH-GSHE

A rice flour slurry containing a) 105 g in 395g $DH_2O$; b) 142.5 g in 357.5g DH2O; and c) 178.5 g in 321.5g $DH_2O$ was prepared in different flasks. The pH of the slurry was adjusted to pH 5.5 using 6N $H_2SO_4$. G-Zyme G997 was added at 0.2 kg/MT rice flour. To each flask different concentrations of rH-GSHE was added. The flasks were kept in a water bath maintained at 60°C and the mixture was stirred continuously during the incubation for uniform mixing. Samples were withdrawn at different time intervals, centrifuged and used for measuring Brix as described above. The samples were subject to HPLC analysis. The results as illustrated in Table 11 show that the incubation of the rice flour slurry at a concentration of up to 25% with alpha amylase and H-GSHE resulted in complete solubilization of the granular rice starch and produced glucose at greater than 96% glucose yield.

TABLE 11

| Rf (W/W) | IT (hr) | G997 (kg/MT) | H-GSHE GSHE U/g | SS % | DP1 | DP2 | DP3 | DP4+ |
|---|---|---|---|---|---|---|---|---|
| | 12 | 0.2 | 0.5 | 80.7 | 88.1 | 9.0 | 1.2 | 1.7 |
| | | 0.2 | 0.75 | 94.8 | 96.9 | 2.5 | 0.6 | 0.4 |
| 22 | | 0.2 | 1.0 | 97.4 | 97.3 | 2.4 | 0 | 0.4 |
| | 16 | 0.2 | 0.5 | 90.6 | 89.6 | 7.9 | 1.0 | 1.4 |
| | | 0.2 | 0.75 | 98.4 | 96.8 | 2.7 | 0.1 | 0.4 |
| | | 0.2 | 1.0 | 100 | 97.0 | 2.6 | 0.1 | 0.4 |
| | 20 | 0.2 | 0.5 | 91 | 90.8 | 7.2 | 0.8 | 1.1 |
| | | 0.2 | 0.75 | 99.5 | 96.6 | 2.9 | 0.1 | 0.4 |
| | | 0.2 | 1.0 | 99.1 | 96.7 | 2.9 | 0.1 | 0.4 |
| | 25 | 0.2 | 0.5 | 96.6 | 91.9 | 6.5 | 0.7 | 0.9 |
| | | 0.2 | 0.75 | 100 | 96.6 | 3.0 | 0.1 | 0.4 |
| | | 0.2 | 1.0 | 100 | 96.5 | 3.1 | 0.1 | 0.3 |
| | 12 | 0.2 | 0.5 | 80.2 | 95.2 | 3.8 | 0.3 | 0.7 |
| | | 0.2 | 0.75 | 85.7 | 96.3 | 3.0 | 0.1 | 0.5 |
| | | 0.2 | 1.0 | 89 | 96.5 | 2.9 | 0.1 | 0.4 |
| 25.7 | | | | | | | | |
| | 16 | 0.2 | 0.5 | 84 | 95.4 | 3.7 | 0.2 | 0.6 |

(continued)

| Rf (W/W) | IT (hr) | G997 (kg/MT) | H-GSHE GSHE U/g | SS % | DP1 | DP2 | DP3 | DP4+ |
|---|---|---|---|---|---|---|---|---|
| | | 0.2 | 0.75 | 85.2 | 96.0 | 3.3 | 0.1 | 0.5 |
| | | 0.2 | 1.0 | 92.3 | 96.1 | 3.3 | 0.1 | 0.5 |
| | 20 | 0.2 | 0.5 | 87.2 | 95.6 | 3.8 | 0.2 | 0.5 |
| | | 0.2 | 0.75 | 87.8 | 95.7 | 3.6 | 0.1 | 0.5 |
| | | 0.2 | 1.0 | 94.6 | 95.7 | 3.8 | 0.1 | 0.4 |
| | 25 | 0.2 | 0.5 | 89 | 95.4 | 3.8 | 0.2 | 0.5 |
| | | 0.2 | 0.75 | 90.4 | 95.6 | 3.9 | 0.2 | 0.4 |
| | | 0.2 | 1.0 | 98.1 | 95.3 | 4.2 | 0.2 | 0.4 |
| | 12 | 0.2 | 0.5 | 65.6 | 92.9 | 5.5 | 0.6 | 0.9 |
| | | 0.2 | 0.75 | 69.5 | 94.5 | 4.3 | 0.3 | 0.7 |
| | | 0.2 | 1.0 | 75.2 | 95.5 | 3.5 | 0.1 | 0.6 |
| 35.7 | 16 | 0.2 | 0.5 | 70.7 | 93.7 | 5.1 | 0.4 | 0.8 |
| | | 0.2 | 0.75 | 72.7 | 95.9 | 4.3 | 0.2 | 0.6 |
| | | 0.2 | 1.0 | 79.4 | 95.4 | 3.8 | 0.2 | 0.5 |
| | 20 | 0.2 | 0.5 | 73.7 | 93.9 | 4.9 | 0.3 | 0.7 |
| | | 0.2 | 0.75 | 75.7 | 94.7 | 4.5 | 0.2 | 0.5 |
| | | 0.2 | 1.0 | 81.3 | 95.1 | 4.1 | 0.2 | 0.5 |
| | 25 | 0.2 | 0.5 | 76.4 | 94.0 | 4.9 | 0.3 | 0.6 |
| | | 0.2 | 0.75 | 77.7 | 94.5 | 4.6 | 0.2 | 0.5 |
| | | 0.2 | 1.0 | 83.7 | 94.7 | 4.5 | 0.2 | 0.5 |
| Rf = rice flour; IT = incubation time; ss = solublized starch | | | | | | | | |

EXAMPLE 11 - Evaluation of the protein content of the rice protein concentrate and high-purity rice protein concentrate

Distilled $H_2O$ (700g) was added to 300 g of white rice flour (Elephant brand, Thai Better Foods, Co. Ltd., Bangpong, Thailand) in a 1000 ml stainless steel container to make up a 30% ds rice flour slurry. The pH of the slurry was adjusted to pH 5.5 using 6N $H_2SO_4$. The slurry was placed into a 60°C water bath and stirred continuously for uniform mixing before enzymes were added. rH-GSHE was added at a dosage rate of 1.0 GSHE Units/g rice flour, ds and G-Zyme G997 was added at a dosage of 0.1 kg/MT rice flour ds. After enzyme addition, the suspensions were incubated at 60°C for 24 hours with stirring (until more than 99% of the granular rice was solubilized).

Solubilization of rice starch at a pH of the minimum solubility of rice protein (pH 3.0 - 5.5) facilitated the separation of insoluble rice protein from solublized rice starch. After completion of the hydrolysis of rice starch, the incubated slurry was filtered using a Buchner funnel on Whatman No. 1 filter paper to obtain a wet cake. A small portion of the wet cake was washed several times with $dH_2O$ and dried at 60°C (single treatment). The remaining wet cake was reslurried in 300g $dH_2O$ and incubated at 60°C for an additional 12 hrs with G-Zyme G997 (0.1 kg/MT rice flour) and rH-GSHE (1.0 GSHE Units/g rice flour). The pH of the slurry was adjusted at 60°C to pH 3.5 using 6N $H_2SO_4$ to terminate the enzyme reaction. Using a Buchner funnel for filtering with Whatman filter paper, the insoluble rice protein was separated. The cake was washed with $dH_2O$ to remove any solubilized starch. The rice protein concentrate was dried at 60°C until the moisture content was reduced to less than 5.0% (double treatment).

The proximate composition of the rice protein was determined and is given in Table 12. The protein concentrate from the high temperature jet cooking process was obtained as follows: SPEZYME FRED (Genencor International Inc.) (0.1kg/MT rice flour) was added to a 30% aqueous slurry of rice substrate, pH 5.5. The slurry was passed through a jet cooker maintained at 105°C (holding for 8 min) and then flashed to atmospheric pressure. The liquefaction was continued for another 90 min at 95°C. The pH of the liquefied starch was adjusted to pH 4.2 and the temperature was decreased to 60°C. OPTIMAX 4060 VHP (a glucoamylase and pullulanase blend from Genencor International Inc.) was added at 0.4 kg/MT of rice substrate and incubated for 48 hours and washed at least twice. The solubles were separated by centrifugation as described above to obtain a cake comprising an insoluble protein residue. The protein residue was washed with $dH_2O$ and dried at 60°C.

The results demonstrate that the process encompassed by the invention resulted in the separation of a high-purity rice protein concentrate by hydrolyzing granular rice starch from the rice substrate.

TABLE 12

| Composition of Rice Protein by Hydrolyzing Granular Rice Starch | | |
|---|---|---|
| Preparation | % Protein (N x 5.95) | % Moisture |
| Rice flour | 8.0 | 10 |
| Protein fraction from high temperature jet cooking process* | 60.0 | |
| Protein concentrate (single treatment) | 43.0 | |
| High-purity Protein concentrate (double treatment) | 70.0 | 3.9 |

EXAMPLE 12

Evaluation of the aqueous solubility of the rice protein concentrate.

A rice protein concentrate was obtained according to example 11 above. Additionally a protein fraction was prepared at conventional high temperatures following the description provided in example 11. A suspension of the protein concentrate and protein fraction was obtained and the pH was adjusted with either NaOH or $H_2SO_4$ as appropriate to obtain pH levels of 2.0, 4.0, 6.0, 8.0 and 10.0. The suspension was continuously stirred at room temperature and samples were adjusted to their respective starting pH every 15 minutes. The solublized protein was separated by centrifugation as described above and the clear solution was used to determine the total nitrogen (N). The protein content (%P) was calculated as N x 5.95.

TABLE 13

| Treatment pH | % Solublized Protein Conventional Process | % Solublized Protein Invention Process |
|---|---|---|
| 2.0 | 3.2 | 33.0 |
| 4.0 | 2.6 | 18.0 |
| 6.0 | 3.1 | 2.5 |
| 8.0 | 5.3 | 5.0 |
| 10.0 | 6.5 | 59.6 |

EXAMPLE 13 -

Effect of protease treatment on solubilization and hydrolysis of the rice protein concentrate

In a typical study a 2.0% rice protein concentrate obtained according to the method of the invention and a 2.0% rice protein fraction obtained according to conventional processes as described above were incubated at pH 2.0 with acid fungal proteases (units/g protein) at 50°C. During the incubation, the pH of the sample was adjusted every 15 minutes. Samples were withdrawn at 60 min, 120 min, 240 min, 360 min, and 720 min adding an equal volume of 10% trichloroacetic (TCA) solution to precipitate the unhydrolyzed protein. The samples were cooled at 5°C and then filtered. The clear filtrate was analyzed for total N (data not shown).

In further studies a 2.0% rice protein suspension obtained according to the method of the invention and a 2.0% rice protein fraction obtained according to conventional processes as described above were incubated at pH 7.0 with Proteinase T and PROTEX 6L (Genencor) at 55°C to simulate the human lower digestive system. During the incubation, the pH of the sample was adjusted every 15 minutes. Samples were withdrawn at different time intervals and the unhydrolyzed protein was precipitated by addition of 10% TCA. The samples were cooled at 5°C and then filtered. The clear filtrate was analyzed for total N (data not shown).

EXAMPLE 14 - Amino acid composition of a high-purity rice protein concentrate.

The amino acid composition (%) of a high-purity rice protein concentrate (double treatment) as described above in example 11 was compared to the amino acid composition of the protein fraction obtained from the high temperature conventional process as described in example 11 and reference is made to Table 14. The amino acid compositions of the high-purity protein concentrate and the protein fraction are compared to the amino acid composition (%) of casein. The values for casein were obtained from Shih et al., (2000) JAOCS 77: 885 - 889 and Morita et al. (1993) J. Food Sci. 58: 1393 - 1396.

TABLE 14

| Amino Acid | Retention Time (min) | AA amount (g/100g) LT | AA amount (g/100g) HT | Casein |
|---|---|---|---|---|
| Asp | 1.226 | 6.251 | 4.81 | 9.17 |
| Glu | 1.383 | 13.611 | 9.921 | 18.8 |
| Ser | 3.534 | 3.67 | 2.905 | 7.99 |
| His | 4.518 | 1.107 | 0.774 | 2.25 |
| Gly | 4.606 | 3.069 | 2.358 | 4.99 |
| Thr | 4.954 | 2.841 | 2.143 | 4.59 |
| Ala | 6.18 | 4.259 | 3.093 | 4.99 |
| Arg | 6.405 | 5.927 | 4.359 | 3.23 |
| Tyr | 7.831 | 3.846 | 2.568 | 3.51 |
| Cys | 9.164 | 0.837 | 0.825 | - |
| Val | 9.635 | 4.647 | 2.7 | 5.77 |
| Met | 9.856 | 2.292 | 1.647 | 2.10 |
| Phe | 11.258 | 4.418 | 3.199 | 3.46 |
| Ile | 11.496 | 3.535 | 1.943 | 3.54 |
| Leu | 12.132 | 6.595 | 4.678 | 6.41 |
| Lys | 12.855 | 2.491 | 1.832 | 8.48 |
| Pro | 16.456 | 3.549 | 2.591 | 12.40 |
| Total -N (g/100g) | | 72.943 | 52.315 | |
| LT = low temperature, double treatment as described in example 11. HT = high temperature, conventional treatment as described in example 11. | | | | |

**Claims**

1.  A process for producing a rice protein concentrate from a rice substrate comprising, a) enzymatically hydrolyzing a rice substrate with I) an enzyme having granular starch hydrolyzing (GSH) activity and II) a second starch hydrolyzing enzyme at a temperature at or below 72°C and at a pH of about 3.0 to 6.5 for a period of time sufficient for the hydrolysis of a substantial portion of the starch in the rice substrate to obtain a solubilized starch fraction and a residue fraction which includes insoluble protein and b) separating the solubilized starch fraction from the residue to obtain a rice protein concentrate.

2.  The process according to claim 1, wherein the enzyme having GSH activity is a glucoamylase.

3.  The process according to claim 2, wherein the glucoamylase is derived from a strain of *Humicola, Rhizopus* or *Aspergillus.*

4.  The process according to claim 1, wherein the second starch hydrolyzing enzyme is an alpha-amylase.

**5.** The process according to claim 4, wherein the alpha amylase is derived from a bacterial source.

**6.** The process according to claim 1, wherein the enzyme having GSH activity is obtained from the heterologous expression of a GASH enzyme in a *Trichoderma* strain or an *Aspergillus* strain.

**7.** The process according to claim 1 further comprising the step purifying the rice protein concentrate.

**8.** The process according to claim 1 further comprising the step of drying the rice protein concentrate.

**9.** The process according to claim 1, wherein the protein content of the rice protein concentrate is at least about 20%.

**10.** The process according to claim 1, wherein the rice substrate is slurried and has a dry solid content of between 10 to 55%.

**11.** The process according to claim 1, wherein the temperature is between 70° and 55°C.

**12.** The process according to claim 1 further comprising the step of c) enzymatically hydrolyzing the rice protein concentrate obtained in step b) with an enzyme having GSH activity and a starch hydrolyzing enzyme at a pH of about 3.0 to 6.5 and at a temperature range of 70° to 55°C to obtain a fraction including solublized starch and insoluble rice protein and d) separating the fractions to obtain a high-purity rice protein concentrate.

**13.** The process according to claim 12 further comprising drying the high-purity rice protein concentrate obtained in step d).

**14.** The process according to claim 12, wherein the starch hydrolyzing enzyme of step c) is an alpha amylase.

**15.** The process according to claim 12, wherein the protein content of the high-purity rice protein concentrate is at least about 60%.

**16.** A method of increasing the protein content of an animal feed comprising a) contacting a rice substrate with a combination of enzymes which include a starch hydrolyzing enzyme and a granular starch hydrolyzing (GSH) enzyme at a temperature below 72°C for a sufficient period of time to hydrolyze 60% of the starch in the rice substrate, b) obtaining a solublized starch fraction and a residue, said residue including insoluble protein, c) separating the residue to obtain a rice protein concentrate and d) adding the rice protein concentrate to an animal feed.

**17.** The method according to claim 16, wherein the starch hydrolyzing enzyme is an alpha amylase.

**18.** The method according to claim 16 further comprising the steps of contacting the residue obtained in step d) with a GSH enzyme and optionally a starch hydrolyzing enzyme to obtain a fraction including solublized starch and a residue comprising insoluble rice protein, separating the residue to obtain a high-purity rice protein concentrate, and adding the hlgh-purity rice protein concentrate to an animal feed.

**Patentansprüche**

**1.** Verfahren zur Produktion eines Reisproteinkonzentrats aus einem Reissubstrat, umfassend a) das enzymatische Hydrolysieren eines Reissubstrats mit i) einem Enzym, das eine granulare Stärke hydrolysierende (GSH-) Aktivität aufweist, und ii) einem zweiten Stärke hydrolysierenden Enzym bei einer Temperatur von oder unter 72 °C und bei einem pH von etwa 3,0 bis 6,5 für eine Zeitspanne, die für die Hydrolyse eines wesentlichen Abschnitts der Stärke im Reissubstrat ausreicht, um eine solubilisierte Stärkefraktion und eine Rückstandsfraktion, die unlösliches Protein umfasst, zu erhalten, sowie b) das Trennen der solubilisierten Stärkefraktion vom Rückstand, um ein Reisproteinkonzentrat zu erhalten.

**2.** Verfahren nach Anspruch 1, worin das Enzym mit GSH-Aktivität eine Glukoamylase ist.

**3.** Verfahren nach Anspruch 2, worin die Glukoamylase von einem Stamm von Humicola, Rhizopus oder Aspergillus abstammt.

**4.** Verfahren nach Anspruch 1, worin das zweite Stärke hydrolysierende Enzym eine α-Amylase ist.

**5.** Verfahren nach Anspruch 4, worin die α-Amylase von einer bakteriellen Quelle stammt.

**6.** Verfahren nach Anspruch 1, worin das Enzym mit GSH-Aktivität aus der heterologen Expression eines GSH-Enzyms in einem Trichoderma-Stamm oder einem Aspergillus-Stamm erhalten wird.

**7.** Verfahren nach Anspruch 1, weiters umfassend den Schritt des Reinigens des Reisproteinkonzentrats.

**8.** Verfahren nach Anspruch 1, weiters umfassend den Schritt des Trocknens des Reisproteinkonzentrats.

**9.** Verfahren nach Anspruch 1, worin der Proteingehalt des Reisproteinkonzentrats zumindest etwa 20 % beträgt.

**10.** Verfahren nach Anspruch 1, worin das Reissubstrat aufgeschlämmt ist und einen Trockenfeststoffgehalt von zwischen 10 und 55 % aufweist.

**11.** Verfahren nach Anspruch 1, worin die Temperatur zwischen 70 °C und 55 °C liegt.

**12.** Verfahren nach Anspruch 1, weiters umfassend den Schritt c) des enzymatischen Hydrolysierens des Reisproteinkonzentrats, das in Schritt b) erhalten wurde, mit einem Enzym mit GSH-Aktivität und einem Stärke hydrolysierenden Enzym bei einem pH von etwa 3,0 bis 6,5 und in einem Temperaturbereich von 70 °C bis 55 °C, um eine Fraktion zu erhalten, die solubilisierte Stärke und unlösliches Reisprotein umfasst, sowie d) des Trennens der Fraktionen, um ein hochgradig reines Reisproteinkonzentrat zu erhalten.

**13.** Verfahren nach Anspruch 12, weiters umfassend das Trocknen des hochgradig reinen Reisproteinkonzentrats, das in Schritt d) erhalten wurde.

**14.** Verfahren nach Anspruch 12, worin das Stärke hydrolysierende Enzym aus Schritt c) eine α-Amylase ist.

**15.** Verfahren nach Anspruch 12, worin der Proteingehalt des hochgradig reinen Reisproteinkonzentrats zumindest etwa 60 % beträgt.

**16.** Verfahren zur Erhöhung des Proteingehalts eines Tierfuttermittels, umfassend a) das Kontaktieren eines Reissubstrats mit einer Kombination von Enzymen, die ein Stärke hydrolysierendes Enzym und ein granulare Stärke hydrolysierendes (GSH-) Enzym umfasst, bei einer Temperatur unter 72 °C für eine Zeitspanne, die ausreicht, um 60 % der Stärke im Reissubstrat zu hydrolysieren, b) das Erhalten einer solubilisierten Stärkefraktion und eines Rückstands, wobei der Rückstand unlösliches Protein umfasst, c) das Trennen des Rückstands, um ein Reisproteinkonzentrat zu erhalten, und d) das Hinzufügen des Reisproteinkonzentrats zu einem Tierfuttermittel.

**17.** Verfahren nach Anspruch 16, worin das Stärke hydrolysierende Enzym eine α-Amylase ist.

**18.** Verfahren nach Anspruch 16, weiters umfassend die Schritte des Kontaktierens des Rückstands, der in Schritt d) erhalten wurde, mit einem GSH-Enzym sowie gegebenenfalls einem Stärke hydrolysierenden Enzym, um eine Fraktion zu erhalten, die solubilisierte Stärke und einen Rückstand, der unlösliches Reisprotein enthält, umfasst, des Trennens des Rückstands, um ein hochgradig reines Reisproteinkonzentrat zu erhalten, und des Hinzufügens des hochgradig reinen Reisproteinkonzentrats zu einem Tierfuttermittel.

## Revendications

**1.** Procédé de production d'un concentré protéique de riz à partir d'un substrat de riz comprenant a) l'hydrolyse enzymatique d'un substrat de riz avec I) une enzyme ayant une activité hydrolysant l'amidon granulaire (GSH) et II) une deuxième enzyme hydrolysant l'amidon à une température à ou en dessous de 72°C et à un pH d'environ 3,0 à 6,5 durant une période de temps suffisante pour l'hydrolyse d'une portion substantielle de l'amidon dans le substrat de riz pour obtenir une fraction d'amidon dissoute et une fraction de résidu qui inclut la protéine insoluble et b) séparer la fraction d'amidon dissoute du résidu afin d'obtenir un concentré protéique de riz.

**2.** Procédé selon la revendication 1, dans lequel l'enzyme ayant une activité GSH est une glucoamylase.

**3.** Procédé selon la revendication 2, où la glucoamylase est dérivée d'une souche de *Humicola, Rhizopus* ou *Aspergillus.*

**4.** Procédé selon la revendication 1, dans lequel la deuxième enzyme hydrolysant l'amidon est une alpha-amylase.

**5.** Procédé selon la revendication 4, dans lequel l'alpha-amylase est dérivé d'une source bactérienne.

**6.** Procédé selon la revendication 1, dans lequel l'enzyme ayant l'activité GSH est obtenue de l'expression hétérologue d'une enzyme GSH dans une souche *Trichoderma* ou une souche *Aspergillus.*

**7.** Procédé selon la revendication 1, comprenant en outre l'étape consistant à purifier le concentré protéique de riz.

**8.** Procédé selon la revendication 1, comprenant en outre l'étape consistant à sécher le concentré protéique de riz.

**9.** Procédé selon la revendication 1, dans lequel la teneur en protéine du concentré protéique de riz est au moins d'environ 20%.

**10.** Procédé selon la revendication 1, dans lequel le substrat de riz est boueux et possède une teneur en solides comprise entre 10 et 55%.

**11.** Procédé selon la revendication 1, dans lequel la température est entre 70° et 55°C.

**12.** Procédé selon la revendication 1, comprenant en outre l'étape de c) hydrolyser de manière enzymatique le concentré protéique de riz obtenu à l'étape b) avec une enzyme ayant une activité GSH et une enzyme hydrolysant l'amidon à un pH d'environ 3,0 à 6,5 et à au moins une plage de température de 70° à 55°C pour obtenir une fraction incluant de l'amidon solubilisé et la protéine de riz insoluble et d) séparer les fractions pour obtenir un concentré protéique de riz de pureté élevée.

**13.** Procédé selon la revendication 12, comprenant en outre le séchage du concentré protéique de riz de pureté élevée obtenu à l'étape d).

**14.** Procédé selon la revendication 12, dans lequel l'enzyme hydrolysant l'amidon de l'étape c) est une alpha-amylase.

**15.** Procédé selon la revendication 12, dans lequel la teneur en protéine du concentré protéique de riz de pureté élevée est au moins d'environ 60%.

**16.** Procédé pour augmenter la teneur en protéine d'un aliment pour animaux comprenant a) la mise en contact d'un substrat de riz avec une combinaison d'enzymes qui comprennent une enzyme hydrolysant l'amidon et une enzyme hydrolysant l'amidon granulaire (GSH) à une température en dessous de 72°C pendant une période de temps suffisante pour hydrolyser 60% de l'amidon dans le substrat de riz, b) obtenir une fraction d'amidon solubilisé et un résidu, ledit résidu incluant la protéine insoluble, c) séparer le résidu pour obtenir un concentré protéique de riz et d) ajouter le concentré protéique de riz à un aliment pour animaux.

**17.** Procédé selon la revendication 16, dans lequel l'enzyme hydrolysant l'amidon est une alpha-amylase.

**18.** Procédé selon la revendication 16, comprenant en outre les étapes consistant à mettre en contact le résidu obtenu à l'étape d) avec une enzyme GSH et en option une enzyme hydrolysant l'amidon pour obtenir une fraction incluant l'amidon solubilisé et un résidu comprenant la protéine de riz insoluble, séparer le résidu pour obtenir un concentré protéique de riz de pureté élevée et ajouter le concentré protéique de riz de pureté élevée à un aliment pour animaux.

Figure 1. *H. grisea* GSHE nucleotide sequence with *putative* introns bold & underlined.

ATGCATACCTTCTCCAAGCTCCTCGTCCTGGGCTCTGCCGTCCAGTCTGCCCTCGGGCGGCCTCACGGCTCT

TCGCGTCTCCAGGAACGCGCTGCCGTTGATACCTTCATCAACACCGAGAAGCCCATCGCATGGAACAAGCTG

CTCGCCAACATCGGCCCTAACGGCAAAGCCGCTCCCGGTGCCGCCGCCGGCGTTGTGATTGCCAGCCCTTCC

AGGACGGACCCTCCTT**GTACGTGGTGGCATGGAATGGACCCAAGAGACTGGTTTTAGATGAAAGAGAGTTTC**

**TGCTAACCGCCACACCCAG**ACTTCTTCACCTGGACCCGCGATGCCGCCCTGGTCCTCACCGGCATCATCGAG

TCCCTTGGCCACAACTACAACACCACCCTGCAGACCGTCATCCAGAACTACGTCGCGTCGCAGGCCAAGCTG

CAGCAGGTCTCGAACCCCTCGGGAACCTTCGCCGACGGCTCGGGTCTCGGTGAGGCCAAGTTCAATGTCGAC

CTCACTGCCTTCACTGGCGAATGGGGTCGCCCTCAGAGGGACGGCCCGCCCCTGCGCGCCATCGCTCTCATC

CAGTACGCCAAGTGGCTGATCGCCAACGGCTACAAGAGCACGGCCAAGAGCGTCGTCTGGCCCGTCGTCAAG

AACGATCTCGCCTACACGGCCCAGTACTGGAACGAGACCGGCTTCGATCTCTGGGAGGAGGTCCCCGGCAGC

TCGTTCTTTACCATCGCCAGCTCTCACAGGG**GTGAGTCATTTATTGTTCAGTGTTTTCTCATTGAATAATTA**

**CCGGAATGCCACTGACGCCAAACAG**CTCTGACTGAGGGTGCTTACCTCGCCGCTCAGCTCGACACCGAGTGC

CGCGCCTGCACGACCGTCGCCCCTCAGGTTCTGTGCTTCCAGCAGGCCTTCTGGAACTCCAAGGGCAACTAT

GTCGTCTCCAACA**GTAAGATCCCTACACCAACAAAAAAAATCGAAAAGGAACGTTAGCTGACCCTTCTAGT**C

AACGGCGGCGAGTATCGCTCCGGCAAGGACGCCAACTCGATCCTGGCGTCCATCCACAACTTCGACCCTGAG

GCCGGCTGCGACAACCTGACCTTCCAGCCCTGCAGCGAGCGCGCCCTGGCCAACCACAAGGCCTATGTCGAC

TCGTTCCGCAACCTCTACGCCATCAACAAGGGCATCGCCCAGGGCAAGGCCGTTGCCGTCGGCCGCTACTCG

GAGGATGTCTACTACAACGGCAACCCGTGGTACCTGGCCAACTTTGCCGCCGCCGAGCAGCTCTACGACGCC

ATCTACGTGTGGAACAAGCAGGGCTCCATCACCGTGACCTCGGTCTCCCTGCCCTTCTTCCGCGACCTTGTC

TCGTCGGTCAGCACCGGCACCTACTCCAAGAGCAGCTCGACCTTCACCAACATCGTCAACGCCGTCAAGGCC

TACGCCGACGGCTTCATCGAGGTGGCGGCCAAGTACACCCCGTCCAACGGCGCGCTCGCCGAGCAGTACGAC

CGCAACACGGGCAAGCCCGACTCGGCCGCCGACCTGACGTGGTCGTACTCGGCCTTCCTCTCGGCCATCGAC

CGCCGCGCGGGTCTCGTCCCCCCGAGCTGGCGGGCCAGCGTGGCCAAGAGCCAGCTGCCGTCCACCTGCTCG

CGCATCGAGGTCGCCGGCACCTACGTCGCCGCCACGAGCACCTCGTTCCCGTCCAAGCAGACCCCGAACCCC

TCCGCGGCGCCCTCCCCGTCCCCCTACCCGACCGCCTGCGCGGACGCTAGCGAGGTGTACGTCACCTTCAAC

GAGCGCGTGTCGACCGCGTGGGGCGAGACCATCAAGGTGGTGGGCAACGTGCCGGCGCTGGGGAACTGGGAC

ACGTCCAAGGCGGTGACCCTGTCGGCCAGCGGGTACAAGTCGAATGATCCCCTCTGGAGCATCACGGTGCCC

ATCAAGGCGACGGGCTCGGCCGTGCAGTACAAGTATATCAAGGTCGGCACCAACGGGAAGATTACTTGGGAG

TCGGACCCCAACAGGAGCATTACCCTGCAGACGGCGTCGTCTGCGGGCAAGTGCGCCGCGCAGACGGTGAAT

GATTCGTGGCGTTAA

Figure 2A. *H. grisea* GSHE protein sequence with *putative* signal sequence underlined.

M H T F S K L L V L G S A V Q S A L G R P H G S S R L Q E R A A V D T F I N T E
K P I A W N K L L A N I G P N G K A A P G A A A G V V I A S P S R T D P P Y F F
T W T R D A A L V L T G I I E S L G H N Y N T T L Q T V I Q N Y V A S Q A K L Q
Q V S N P S G T F A D G S G L G E A K F N V D L T A F T G E W G R P Q R D G P P
L R A I A L I Q Y A K W L I A N G Y K S T A K S V V W P V V K N D L A Y T A Q Y
W N E T G F D L W E E V P G S S F F T I A S S H R A L T E G A Y L A A Q L D T E
C R A C T T V A P Q V L C F Q Q A F W N S K G N Y V V S N I N G G E Y R S G K D
A N S I L A S I H N F D P E A G C D N L T F Q P C S E R A L A N H K A Y V D S F
R N L Y A I N K G I A Q G K A V A V G R Y S E D V Y Y N G N P W Y L A N F A A A
E Q L Y D A I Y V W N K Q G S I T V T S V S L P F F R D L V S S V S T G T Y S K
S S S T F T N I V N A V K A Y A D G F I E V A A K Y T P S N G A L A E Q Y D R N
T G K P D S A A D L T W S Y S A F L S A I D R R A G L V P P S W R A S V A K S Q
L P S T C S R I E V A G T Y V A A T S T S F P S K Q T P N P S A A P S P S P Y P
T A C A D A S E V Y V T F N E R V S T A W G E T I K V V G N V P A L G N W D T S
K A V T L S A S G Y K S N D P L W S I T V P I K A T G S A V Q Y K Y I K V G T N
G K I T W E S D P N R S I T L Q T A S S A G K C A A Q T V N D S W R

Figure 2B. *H. grisea* Mature GSHE protein sequence

A A V D T F I N T E K P I A W N K L L A N I G P N G K A A P G A A A G V V I A S
P S R T D P P Y F F T W T R D A A L V L T G I I E S L G H N Y N T T L Q T V I Q
N Y V A S Q A K L Q Q V S N P S G T F A D G S G L G E A K F N V D L T A F T G E
W G R P Q R D G P P L R A I A L I Q Y A K W L I A N G Y K S T A K S V V W P V V
K N D L A Y T A Q Y W N E T G F D L W E E V P G S S F F T I A S S H R A L T E G
A Y L A A Q L D T E C R A C T T V A P Q V L C F Q Q A F W N S K G N Y V V S N I
N G G E Y R S G K D A N S I L A S I H N F D P E A G C D N L T F Q P C S E R A L
A N H K A Y V D S F R N L Y A I N K G I A Q G K A V A V G R Y S E D V Y Y N G N
P W Y L A N F A A A E Q L Y D A I Y V W N K Q G S I T V T S V S L P F F R D L V
S S V S T G T Y S K S S S T F T N I V N A V K A Y A D G F I E V A A K Y T P S N
G A L A E Q Y D R N T G K P D S A A D L T W S Y S A F L S A I D R R A G L V P P
S W R A S V A K S Q L P S T C S R I E V A G T Y V A A T S T S F P S K Q T P N P
S A A P S P S P Y P T A C A D A S E V Y V T F N E R V S T A W G E T I K V V G N
V P A L G N W D T S K A V T L S A S G Y K S N D P L W S I T V P I K A T G S A V
Q Y K Y I K V G T N G K I T W E S D P N R S I T L Q T A S S A G K C A A Q T V N
D S W R

Figure 3.

EP 1 715 753 B1

# FIGURE 4A

```
AAGCTTACTAGTACTTCTCGAGCTCTGTACATGTCCGGTCGCGACGTACGCGTATCGATGGCGCCAGCTG
CAGGCGGCCGCCTGCAGCCACTTGCAGTCCCGTGGAATTCTCACGGTGAATGTAGGCCTTTTGTAGGGTA
GGAATTGTCACTCAAGCACCCCCAACCTCCATTACGCCTCCCCCATAGAGTTCCCAATCAGTGAGTCATG
GCACTGTTCTCAAATAGATTGGGGAGAAGTTGACTTCCGCCCAGAGCTGAAGGTCGCACAACCGCATGAT
ATAGGGTCGGCAACGGCAAAAAGCACGTGGCTCACCGAAAAGCAAGATGTTTGCGATCTAACATCCAGG
AACCTGGATACATCCATCATCACGCACGACCACTTTGATCTGCTGGTAAACTCGTATTCGCCCTAAACCG
AAGTGCGTGGTAAATCTACACGTGGGCCCCTTTCGGTATACTGCGTGTGTCTTCTCTAGGTGCCATTCTT
TTCCCTTCCTCTAGTGTTGAATTGTTTGTGTTGGAGTCCGAGCTGTAACTACCTCTGAATCTCTGGAGAA
TGGTGGACTAACGACTACCGTGCACCTGCATCATGTATATAATAGTGATCCTGAGAAGGGGGGTTTGGAG
CAATGTGGGACTTTGATGGTCATCAAACAAAGAACGAAGACGCCTCTTTTGCAAAGTTTTGTTTCGGCTA
CGGTGAAGAACTGGATACTTGTTGTGTCTTCTGTGTATTTTTGTGGCAACAAGAGGCCAGAGACAATCTA
TTCAAACACCAAGCTTGCTCTTTTGAGCTACAAGAACCTGTGGGGTATATATCTAGAGTTGTGAAGTCGG
TAATCCCGCTGTATAGTAATACGAGTCGCATCTAAATACTCCGAAGCTGCTGCGAACCCGGAGAATCGAG
ATGTGCTGGAAAGCTTCTAGCGAGCGGCTAAATTAGCATGAAAGGCTATGAGAAATTCTGGAGACGGCTT
GTTGAATCATGGCGTTCCATTCTTCGACAAGCAAAGCGTTCCGTCGCAGTAGCAGGCACTCATTCCCGAA
AAAACTCGGAGATTCCTAAGTAGCGATGGAACCGGAATAATATAATAGGCAATACATTGAGTTGCCTCGA
CGGTTGCAATGCAGGGGTACTGAGCTTGGACATAACTGTTCCGTACCCCACCTCTTCTCAACCTTTGGCG
TTTCCCTGATTCAGCGTACCCGTACAAGTCGTAATCACTATTAACCCAGACTGACCGGACGTGTTTTGCC
CTTCATTTGGAGAAATAATGTCATTGCGATGTGTAATTTGCCTGCTTGACCGACTGGGGCTGTTCGAAGC
CCGAATGTAGGATTGTTATCCGAACTCTGCTCGTAGAGGCATGTTGTGAATCTGTGTCGGGCAGGACACG
CCTCGAAGGTTCACGGCAAGGGAAACCACCGATAGCAGTGTCTAGTAGCAACCTGTAAAGCCGCAATGCA
GCATCACTGGAAAATACAAACCAATGGCTAAAAGTACATAAGTTAATGCCTAAAGAAGTCATATACCAGC
GGCTAATAATTGTACAATCAAGTGGCTAAACGTACCGTAATTTGCCAACGGCTTGTGGGGTTGCAGAAGC
AACGGCAAAGCCCCACTTCCCCACGTTTGTTTCTTCACTCAGTCCAATCTCAGCTGGTGATCCCCCAATT
GGGTCGCTTGTTTGTTCCGGTGAAGTGAAAGAAGACAGAGGTAAGAATGTCTGACTCGGAGCGTTTTGCA
TACAACCAAGGGCAGTGATGGAAGACAGTGAAATGTTGACATTCAAGGAGTATTTAGCCAGGGATGCTTG
AGTGTATCGTGTAAGGAGGTTTGTCTGCCGATACGACGAATACTGTATAGTCACTTCTGATGAAGTGGTC
CATATTGAAATGTAAAGTCGGCACTGAACAGGCAAAGATTGAGTTGAAACTGCCTAAGATCTCGGGCCC
TCGGGCCTTCGGCCTTTGGGTGTACATGTTTGTGCTCCGGGCAAATGCAAAGTGTGGTAGGATCGAACAC
ACTGCTGCCTTTACCAAGCAGCTGAGGGTATGTGATAGGCAAATGTTCAGGGGCCACTGCATGGTTTCGA
ATAGAAAGAGAAGCTTAGCCAAGAACAATAGCCGATAAAGATAGCCTCATTAAACGGAATGAGCTAGTAG
```

## FIGURE 4B

GCAAAGTCAGCGAATGTGTATATATAAAGGTTCGAGGTCCGTGCCTCCCTCATGCTCTCCCCATCTACTC
ATCAACTCAGATCCTCCAGGAGACTTGTACACCATCTTTTGAGGCACAGAAACCCAATAGTCAACCATCA
CAAGTTTGTACAAAAAAGCAGGCTCCGCGGCCGCCCCCTTCAACATGCATACCTTCTCCAAGCTCCTCGT
CCTGGGCTCTGCCGTCCAGTCTGCCCTCGGGCGGCCTCACGGCTCTTCGCGTCTCCAGGAACGCGCTGCC
GTTGATACCTTCATCAACACCGAGAAGCCCATCGCATGGAACAAGCTGCTCGCCAACATCGGCCCTAACG
GCAAAGCCGCTCCCGGTGCCGCCGCCGGCGTTGTGATTGCCAGCCCTTCCAGGACGGACCCTCCTTGTAC
GTGGTGGCATGGAATGGACCCAAGAGACTGGTTTTAGATGAAAGAGAGTTTCTGCTAACCGCCACACCCA
GACTTCTTCACCTGGACCCGCGATGCCGCCCTGGTCCTCACCGGCATCATCGAGTCCCTTGGCCACAACT
ACAACACCACCCTGCAGACCGTCATCCAGAACTACGTCGCGTCGCAGGCCAAGCTGCAGCAGGTCTCGAA
CCCCTCGGGAACCTTCGCCGACGGCTCGGGTCTCGGTGAGGCCAAGTTCAATGTCGACCTCACTGCCTTC
ACTGGCGAATGGGGTCGCCCTCAGAGGGACGGCCCGCCCCTGCGCGCCATCGCTCTCATCCAGTACGCCA
AGTGGCTGATCGCCAACGGCTACAAGAGCACGGCCAAGAGCGTCGTCTGGCCCGTCGTCAAGAACGATCT
CGCCTACACGGCCCAGTACTGGAACGAGACCGGCTTCGATCTCTGGGAGGAGGTCCCCGGCAGCTCGTTC
TTTACCATCGCCAGCTCTCACAGGGGTGAGTCATTTATTGTTCAGTGTTTTCTCATTGAATAATTACCGG
AATGCCACTGACGCCAAACAGCTCTGACTGAGGGTGCTTACCTCGCCGCTCAGCTCGACACCGAGTGCCG
CGCCTGCACGACCGTCGCCCCTCAGGTTCTGTGCTTCCAGCAGGCCTTCTGGAACTCCAAGGGCAACTAT
GTCGTCTCCAACAGTAAGATCCCTACACCAACAAAAAAAATCGAAAAGGAACGTTAGCTGACCCTTCTAG
TCAACGGCGGCGAGTATCGCTCCGGCAAGGACGCCAACTCGATCCTGGCGTCCATCCACAACTTCGACCC
TGAGGCCGGCTGCGACAACCTGACCTTCCAGCCCTGCAGCGAGCGCGCCCTGGCCAACCACAAGGCCTAT
GTCGACTCGTTCCGCAACCTCTACGCCATCAACAAGGGCATCGCCCAGGGCAAGGCCGTTGCCGTCGGCC
GCTACTCGGAGGATGTCTACTACAACGGCAACCCGTGGTACCTGGCCAACTTTGCCGCCGCCGAGCAGCT
CTACGACGCCATCTACGTGTGGAACAAGCAGGGCTCCATCACCGTGACCTCGGTCTCCCTGCCCTTCTTC
CGCGACCTTGTCTCGTCGGTCAGCACCGGCACCTACTCCAAGAGCAGCTCGACCTTCACCAACATCGTCA
ACGCCGTCAAGGCCTACGCCGACGGCTTCATCGAGGTGGCGGCCAAGTACACCCCGTCCAACGGCGCGCT
CGCCGAGCAGTACGACCGCAACACGGGCAAGCCCGACTCGGCCGCCGACCTGACGTGGTCGTACTCGGCC
TTCCTCTCGGCCATCGACCGCCGCGCGGGTCTCGTCCCCCCGAGCTGGCGGGCCAGCGTGGCCAAGAGCC
AGCTGCCGTCCACCTGCTCGCGCATCGAGGTCGCCGGCACCTACGTCGCCGCCACGAGCACCTCGTTCCC
GTCCAAGCAGACCCCGAACCCCTCCGCGGCGCCCTCCCCGTCCCCCTACCCGACCGCCTGCGCGGACGCT
AGCGAGGTGTACGTCACCTTCAACGAGCGCGTGTCGACCGCGTGGGGCGAGACCATCAAGGTGGTGGGCA
ACGTGCCGGCGCTGGGGAACTGGGACACGTCCAAGGCGGTGACCCTGTCGGCCAGCGGGTACAAGTCGAA
TGATCCCCTCTGGAGCATCACGGTGCCCATCAAGGCGACGGGCTCGGCCGTGCAGTACAAGTATATCAAG

# FIGURE 4C

GTCGGCACCAACGGGAAGATTACTTGGGAGTCGGACCCCAACAGGAGCATTACCCTGCAGACGGCGTCGT

CTGCGGGCAAGTGCGCCGCGCAGACGGTGAATGATTCGTGGCGTTAAAAGGGTGGGCGCGCCGACCCAGC

TTTCTTGTACAAAGTGGTGATCGCGCCAGCTCCGTGCGAAAGCCTGACGCACCGGTAGATTCTTGGTGAG

CCCGTATCATGACGGCGGCGGGAGCTACATGGCCCCGGGTGATTTATTTTTTTTGTATCTACTTCTGACC

CTTTTCAAATATACGGTCAACTCATCTTTCACTGGAGATGCGGCCTGCTTGGTATTGCGATGTTGTCAGC

TTGGCAAATTGTGGCTTTCGAAAACACAAAACGATTCCTTAGTAGCCATGCATTTTAAGATAACGGAATA

GAAGAAGAGGAAATTAAAAAAAAAAAAAAAACAAACATCCCGTTCATAACCCGTAGAATCGCCGCTCTT

CGTGTATCCCAGTACCAGTTTATTTTGAATAGCTCGCCCGCTGGAGAGCATCCTGAATGCAAGTAACAAC

CGTAGAGGCTGACACGGCAGGTGTTGCTAGGGAGCGTCGTGTTCTACAAGGCCAGACGTCTTCGCGGTTG

ATATATATGTATGTTTGACTGCAGGCTGCTCAGCGACGACAGTCAAGTTCGCCCTCGCTGCTTGTGCAAT

AATCGCAGTGGGGAAGCCACACCGTGACTCCCATCTTTCAGTAAAGCTCTGTTGGTGTTTATCAGCAATA

CACGTAATTTAAACTCGTTAGCATGGGGCTGATAGCTTAATTACCGTTTACCAGTGCCATGGTTCTGCAG

CTTTCCTTGGCCCGTAAAATTCGGCGAAGCCAGCCAATCACCAGCTAGGCACCAGCTAAACCCTATAATT

AGTCTCTTATCAACACCATCCGCTCCCCCGGGATCAATGAGGAGAATGAGGGGGATGCGGGGCTAAAGAA

GCCTACATAACCCTCATGCCAACTCCCAGTTTACACTCGTCGAGCCAACATCCTGACTATAAGCTAACAC

AGAATGCCTCAATCCTGGGAAGAACTGGCCGCTGATAAGCGCGCCCGCCTCGCAAAAACCATCCCTGATG

AATGGAAAGTCCAGACGCTGCCTGCGGAAGACAGCGTTATTGATTTCCCAAAGAAATCGGGGATCCTTTC

AGAGGCCGAACTGAAGATCACAGAGGCCTCCGCTGCAGATCTTGTGTCCAAGCTGGCGGCCGGAGAGTTG

ACCTCGGTGGAAGTTACGCTAGCATTCTGTAAACGGGCAGCAATCGCCCAGCAGTTAGTAGGGTCCCCTC

TACCTCTCAGGGAGATGTAACAACGCCACCTTATGGGACTATCAAGCTGACGCTGGCTTCTGTGCAGACA

AACTGCGCCCACGAGTTCTTCCCTGACGCCGCTCTCGCGCAGGCAAGGGAACTCGATGAATACTACGCAA

AGCACAAGAGACCCGTTGGTCCACTCCATGGCCTCCCCATCTCTCTCAAAGACCAGCTTCGAGTCAAGGT

ACACCGTTGCCCCTAAGTCGTTAGATGTCCCTTTTTGTCAGCTAACATATGCCACCAGGGCTACGAAACA

TCAATGGGCTACATCTCATGGCTAAACAAGTACGACGAAGGGGACTCGGTTCTGACAACCATGCTCCGCA

AAGCCGGTGCCGTCTTCTACGTCAAGACCTCTGTCCCGCAGACCCTGATGGTCTGCGAGACAGTCAACAA

CATCATCGGGCGCACCGTCAACCCACGCAACAAGAACTGGTCGTGCGGCGGCAGTTCTGGTGGTGAGGGT

GCGATCGTTGGGATTCGcRVTGGTGGCGTCATCGGTGTAGGAACGGATATCGGTGGCTCGATTCGAGTGC

CGGCCGCGTTCAACTTCCTGTACGGTCTAAGGCCGAGTCATGGGCGGCTGCCGTATGCAAAGATGGCGAA

CAGCATGGAGGGTCAGGAGACGGTGCACAGCGTTGTCGGGCCGATTACGCACTCTGTTGAGGGTGAGTCC

TTCGCCTCTTCCTTCTTTTCCTGCTCTATACCAGGCCTCCACTGTCCTCCTTTCTTGCTTTTTATACTAT

ATACGAGACCGGCAGTCACTGATGAAGTATGTTAGACCTCCGCCTCTTCACCAAATCCGTCCTCGGTCAG

## FIGURE 4D

```
GAGCCATGGAAATACGACTCCAAGGTCATCCCCATGCCCTGGCGCCAGTCCGAGTCGGACATTATTGCCT
CCAAGATCAAGAACGGCGGGCTCAATATCGGCTACTACAACTTCGACGGCAATGTCCTTCCACACCCTCC
TATCCTGCGCGGCGTGGAAACCACCGTCGCCGCACTCGCCAAAGCCGGTCACACCGTGACCCCGTGGACG
CCATACAAGCACGATTTCGGCCACGATCTCATCTCCCATATCTACGCGGCTGACGGCAGCcRVGCCGACG
TAATGCGCGATATCAGTGCATCCGGCGAGCCGGCGATTCCAAATATCAAAGACCTACTGAACCCGAACAT
CAAAGCTGTTAACATGAACGAGCTCTGGGACACGCATCTCCAGAAGTGGAATTACCAGATGGAGTACCTT
GAGAAATGGCGGGAGGCTGAAGAAAAGGCCGGGAAGGAACTGGACGCCATCATCGCGCCGATTACGCCTA
CCGCTGCGGTACGGCATGACCAGTTCCGGTACTATGGGTATGCCTCTGTGATCAACCTGCTGGATTTCAC
GAGCGTGGTTGTTCCGGTTACCTTTGCGGATAAGAACATCGATAAGAAGAATGAGAGTTTCAAGGCGGTT
AGTGAGCTTGATGCCCTCGTGCAGGAAGAGTATGATCCGGAGGCGTACCATGGGGCACCGGTTGCAGTGC
AGGTTATCGGACGGAGACTCAGTGAAGAGAGGACGTTGGCGATTGCAGAGGAAGTGGGGAAGTTGCTGGG
AAATGTGGTGACTCCATAGCTAATAAGTGTCAGATAGCAATTTGCACAAGAAATCAATACCAGCAACTGT
AAATAAGCGCTGAAGTGACCATGCCATGCTACGAAAGAGCAGAAAAAAACCTGCCGTAGAACCGAAGAGA
TATGACACGCTTCCATCTCTCAAAGGAAGAATCCCTTCAGGGTTGCGTTTCCAGTCTAGACACGTATAAC
GGCACAAGTGTCTCTCACCAAATGGGTTATATCTCAAATGTGATCTAAGGATGGAAAGCCCAGAATATCG
ATCGCGCGCAGATCCATATATAGGGCCCGGGTTATAATTACCTCAGGTCGACGTCCCATGGCCATTCGAA
TTCGTAATCATGGTCATAGCTGTTTCCTGTGTGAAATTGTTATCCGCTCACAATTCCACACAACATACGA
GCCGGAAGCATAAAGTGTAAAGCCTGGGGTGCCTAATGAGTGAGCTAACTCACATTAATTGCGTTGCGCT
CACTGCCCGCTTTCCAGTCGGGAAACCTGTCGTGCCAGCTGCATTAATGAATCGGCCAACGCGCGGGGAG
AGGCGGTTTGCGTATTGGGCGCTCTTCCGCTTCCTCGCTCACTGACTCGCTGCGCTCGGTCGTTCGGCTG
CGGCGAGCGGTATCAGCTCACTCAAAGGCGGTAATACGGTTATCCACAGAATCAGGGGATAACGCAGGAA
AGAACATGTGAGCAAAAGGCCAGCAAAAGGCCAGGAACCGTAAAAAGGCCGCGTTGCTGGCGTTTTTCCA
TAGGCTCCGCCCCCCTGACGAGCATCACAAAAATCGACGCTCAAGTCAGAGGTGGCGAAACCCGACAGGA
CTATAAAGATACCAGGCGTTTCCCCCTGGAAGCTCCCTCGTGCGCTCTCCTGTTCCGACCCTGCCGCTTA
CCGGATACCTGTCCGCCTTTCTCCCTTCGGGAAGCGTGGCGCTTTCTCATAGCTCACGCTGTAGGTATCT
CAGTTCGGTGTAGGTCGTTCGCTCCAAGCTGGGCTGTGTGCACGAACCCCCCGTTCAGCCCGACCGCTGC
GCCTTATCCGGTAACTATCGTCTTGAGTCCAACCCGGTAAGACACGACTTATCGCCACTGGCAGCAGCCA
CTGGTAACAGGATTAGCAGAGCGAGGTATGTAGGCGGTGCTACAGAGTTCTTGAAGTGGTGGCCTAACTA
CGGCTACACTAGAAGAACAGTATTTGGTATCTGCGCTCTGCTGAAGCCAGTTACCTTCGGAAAAAGAGTT
GGTAGCTCTTGATCCGGCAAACAAACCACCGCTGGTAGCGGTGGTTTTTTTGTTTGCAAGCAGCAGATTA
CGCGCAGAAAAAAAGGATCTCAAGAAGATCCTTTGATCTTTTCTACGGGGTCTGACGCTCAGTGGAACGA
```

# FIGURE 4E

AAACTCACGTTAAGGGATTTTGGTCATGAGATTATCAAAAAGGATCTTCACCTAGATCCTTTTAAATTAA
AAATGAAGTTTTAAATCAATCTAAAGTATATATGAGTAAACTTGGTCTGACAGTTACCAATGCTTAATCA
GTGAGGCACCTATCTCAGCGATCTGTCTATTTCGTTCATCCATAGTTGCCTGACTCCCCGTCGTGTAGAT
AACTACGATACGGGAGGGCTTACCATCTGGCCCCAGTGCTGCAATGATACCGCGAGACCCACGCTCACCG
GCTCCAGATTTATCAGCAATAAACCAGCCAGCCGGAAGGGCCGAGCGCAGAAGTGGTCCTGCAACTTTAT
CCGCCTCCATCCAGTCTATTAATTGTTGCCGGGAAGCTAGAGTAAGTAGTTCGCCAGTTAATAGTTTGCG
CAACGTTGTTGCCATTGCTACAGGCATCGTGGTGTCACGCTCGTCGTTTGGTATGGCTTCATTCAGCTCC
GGTTCCCAACGATCAAGGCGAGTTACATGATCCCCCATGTTGTGCAAAAAAGCGGTTAGCTCCTTCGGTC
CTCCGATCGTTGTCAGAAGTAAGTTGGCCGCAGTGTTATCACTCATGGTTATGGCAGCACTGCATAATTC
TCTTACTGTCATGCCATCCGTAAGATGCTTTTCTGTGACTGGTGAGTACTCAACCAAGTCATTCTGAGAA
TAGTGTATGCGGCGACCGAGTTGCTCTTGCCCGGCGTCAATACGGGATAATACCGCGCCACATAGCAGAA
CTTTAAAAGTGCTCATCATTGGAAAACGTTCTTCGGGGCGAAAACTCTCAAGGATCTTACCGCTGTTGAG
ATCCAGTTCGATGTAACCCACTCGTGCACCCAACTGATCTTCAGCATCTTTTACTTTCACCAGCGTTTCT
GGGTGAGCAAAAACAGGAAGGCAAAATGCCGCAAAAAAGGGAATAAGGGCGACACGGAAATGTTGAATAC
TCATACTCTTCCTTTTTCAATATTATTGAAGCATTTATCAGGGTTATTGTCTCATGAGCGGATACATATT
TGAATGTATTTAGAAAAATAAACAAATAGGGGTTCCGCGCACATTTCCCCGAAAAGTGCCACCTGACGTC
TAAGAAACCATTATTATCATGACATTAACCTATAAAAATAGGCGTATCACGAGGCCCTTTCGTCTCGCGC
GTTTCGGTGATGACGGTGAAAACCTCTGACACATGCAGCTCCCGGAGACGGTCACAGCTTGTCTGTAAGC
GGATGCCGGGAGCAGACAAGCCCGTCAGGGCGCGTCAGCGGGTGTTGGCGGGTGTCGGGGCTGGCTTAAC
TATGCGGCATCAGAGCAGATTGTACTGAGAGTGCACCATAAAATTGTAAACGTTAATATTTTGTTAAAAT
TCGCGTTAAATTTTTGTTAAATCAGCTCATTTTTTAACCAATAGGCCGAAATCGGCAAAATCCCTTATAA
ATCAAAAGAATAGCCCGAGATAGGGTTGAGTGTTGTTCCAGTTTGGAACAAGAGTCCACTATTAAAGAAC
GTGGACTCCAACGTCAAAGGGCGAAAAACCGTCTATCAGGGCGATGGCCCACTACGTGAACCATCACCCA
AATCAAGTTTTTTGGGGTCGAGGTGCCGTAAAGCACTAAATCGGAACCCTAAAGGGAGCCCCCGATTTAG
AGCTTGACGGGGAAAGCCGGCGAACGTGGCGAGAAAGGAAGGGAAGAAAGCGAAAGGAGCGGGCGCTAGG
GCGCTGGCAAGTGTAGCGGTCACGCTGCGCGTAACCACCACACCCGCCGCGCTTAATGCGCCGCTACAGG
GCGCGTACTATGGTTGCTTTGACGTATGCGGTGTGAAATACCGCACAGATGCGTAAGGAGAAAATACCGC
ATCAGGCGCCATTCGCCATTCAGGCTGCGCAACTGTTGGGAAGGGCGATCGGTGCGGGCCTCTTCGCTAT
TACGCCAGCTGGCGAAAGGGGGATGTGCTGCAAGGCGATTAAGTTGGGTAACGCCAGGGTTTTCCCAGTC
ACGACGTTGTAAAACGACGGCCAGTGCCC

## FIGURE 5: Genomic Nucleotide Sequence of *Aspergillus kawachi* GSHE

```
ATGTCGTTCCGATCTCTTCTCGCCCTGAGCGGCCTTGTCTGCTCGGGGTTGGCAAGTGTGATTTC

CAAGCGCGCGACCTTGGATTCGTGGTTGAGCAACGAAGCGACCGTGGCCCGTACTGCGATCCTGA

ATAACATCGGGGCGGACGGTGCTTGGGTGTCGGGCGCGGACTCTGGCATTGTCGTTGCCAGTCCC

AGCACCGATAACCCGGACTGTATGTTTTGAGTTCGGATTATGAATGTGTCTTGGTTGATTGATGC

TGACTGGCGTGTCTTTTGATGATTGTAGACTTCTACACCTGGACTCGCGACTCTGGTCTCGTCAT

CAAGACCCTCGTCGACCTCTTCCGCAATGGAGATACTGATCTCCTTTCCACCATTGAGCACTACA

TCTCCTCTCAGGCAATTATTCAGGGTGTCAGTAACCCCTCTGGTGATCTGTCCAGCGGTGGTCTT

GGTGAGCCCAAGTTCAATGTCGATGAGACTGCCTACACCGGTTCTTGGGGACGGCCGCAGCGTGA

TGGTCCTGCCCTGAGAGCAACTGCTATGATCGGCTTTGGGCAGTGGCTGCTTGTATGTTCTCCAC

CTCCTTGCGTCTGATCTGCAACATATGTAGCCGACTGGTCAGGACAATGGCTACACCAGCGCTGC

AACAGAGATTGTTTGGCCCCTCGTTAGGAACGACCTGTCGTATGTGGCTCAGTACTGGAACCAGA

CGGGATATGGTGTGTTTGATTGATCGGGGTTCAAGGGTGTTTGTGCATCGGAGCTAACTTCGCGG

TCGCAGATCTCTGGGAAGAAGTTAATGGCTCGTCCTTCTTCACTATTGCCGTGCAACACCGCGCC

CTCGTCGAAGGTAGTGCCTTCGCGACGGCCGTCGGCTCGTCCTGCTCCTGGTGTGATTCGCAGGC

ACCTCAGATTCTCTGTTACTTGCAGTCCTTCTGGACCGGCAGCTACATCCTGGCCAACTTTGACA

GCAGCCGTTCCGGCAAGGACACAAACACCCTCCTGGGAAGCATCCACACCTTTGATCCTGAGGCT

GGATGCGACGACTCCACCTTCCAGCCCTGCTCCCCGCGTGCGCTCGCCAACCATAAGGAGGTTGT

AGACTCTTTCCGCTCGATCTATACTCTCAACGATGGTCTCAGTGACAGTGAGGCGGTTGCGGTCG

GTCGGTACCCTGAGGATAGCTACTACAACGGCAACCCGTGGTTCCTGTGCACCTTGGCTGCCGCG

GAACAGCTGTACGATGCTCTGTACCAGTGGGACAAGCAGGGGTCGTTGGAGATCACAGACGTGTC

ACTTGACTTCTTCAAGGCTCTGTACAGTGGTGCTGCCACCGGCACGTACTCTTCGTCCAGCTCGA

CCTATAGCAGCATTGTGAGTGCCGTCAAGACTTTCGCTGATGGTTTTGTTTCTATTGTGGTAAGT

CTACGCTAGACGAGCGCTCATATTTACAGAGGGTGCGTACTAACAGGATTAGGAAACTCACGCCG

CAAGCAACGGCTCTCTGTCTGAGCAATTCGACAAGTCTGATGGCGACGAGCTTTCTGCTCGCGAT

CTGACCTGGTCTTACGCTGCTCTGCTGACCGCCAACAACCGTCGTAATTCTGTCGTGCCCCCGTC

TTGGGGTGAGACCTCTGCCAGCAGCGTGCCCGGCACCTGTGCGGCTACCTCTGCCTCTGGTACCT

ACAGCAGTGTGACCGTCACCTCGTGGCCGAGCATCGTGGCTACTGGTGGCACCACTACGACGGCT

ACTACCACTGGATCGGGCGGCGTGACCTCGACCAGCAAGACCACCACAACTGCTAGTAAGACCAG

CACCACTACGTCCTCGACCTCCTGCACCACCCCCACTGCCGTAGCTGTGACCTTTGATCTGACGG

CGACCACCACCTACGGCGAGAACATCTACCTGGTCGGGTCGATCTCTCAGCTCGGTGACTGGGAG

ACCAGCGATGGCATAGCTCTGAGCGCTGACAAGTACACTTCCAGCAACCCGCTTTGGTATGTAAC

TGTGACTCTGCCGGCTGGTGAGTCATTTGAGTACAAGTTCATCCGCGTCGAGAGCGATGACTCCG

TGGAGTGGGAGAGCGACCCGAACCGGGAATACACCGTTCCTCAGGCGTGCGGCGAGTCGACCGCG

ACGGTGACCGACACCTGGCGGTAG
```

FIGURE 6: *Aspergillus awamori* var. *kawachi* GSHE precursor (including the underlined signal sequence and mature protein) protein sequence.

```
M S F R S L L A L S G L V C S G L A S V I S K R A T L D S W L S N
E A T V A R T A I L N N I G A D G A W V S G A D S G I V V A S P S
T D N P D Y F Y T W T R D S G L V I K T L V D L F R N G D T D L L
S T I E H Y I S S Q A I I Q G V S N P S G D L S S G G L G E P K F
N V D E T A Y T G S W G R P Q R D G P A L R A T A M I G F G Q W L
L D N G Y T S A A T E I V W P L V R N D L S Y V A Q Y W N Q T G Y
D L W E E V N G S S F F T I A V Q H R A L V E G S A F A T A V G S
S C S W C D S Q A P Q I L C Y L Q S F W T G S Y I L A N F D S S R
S G K D T N T L L G S I H T F D P E A G C D D S T F Q P C S P R A
L A N H K E V V D S F R S I Y T L N D G L S D S E A V A V G R Y P
E D S Y Y N G N P W F L C T L A A A E Q L Y D A L Y Q W D K Q G S
L E I T D V S L D F F K A L Y S G A A T G T Y S S S S T Y S S I
V S A V K T F A D G F V S I V E T H A A S N G S L S E Q F D K S D
G D E L S A R D L T W S Y A A L L T A N N R R N S V V P P S W G E
T S A S S V P G T C A A T S A S G T Y S S V T V T S W P S I V A T
G G T T T T A T T T G S G G V T S T S K T T T T A S K T S T T T S
S T S C T T P T A V A V T F D L T A T T T Y G E N I Y L V G S I S
Q L G D W E T S D G I A L S A D K Y T S S N P L W Y V T V T L P A
G E S F E Y K F I R V E S D D S V E W E S D P N R E Y T V P Q A C
G E S T A T V T D T W R
```

## Figure 7

Solubilization and Hydrolysis Of Rice Granular Rice Starch With G-ZYME G997 & Humicola GA At 60°C pH 5.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 54715304 P
- US 4744922 A, Mitchell
- US 3912590 A, Slott
- US 4990344 A, Euber
- US P4863864 A
- EP 171218 A
- EP 0171218 A
- US P4618579 A
- US P5763385 A
- US P5824532 A
- US P5958739 A
- US P6008026 A
- US P6361809 B
- WO 9200381 A
- WO 0004136 A
- US 5650322 A
- US P5874276 A
- EP 137280A1 A
- US 5246853 A
- US 5475101 A
- WO 9206209 A
- US P6022725 A
- US P6268328 B
- EP 244234 A
- EP 215594 A
- US 6022725 A
- US 6268328 A

**Non-patent literature cited in the description**

- **Hansen et al.** *Food Technology,* 1981, vol. 35, 38-42
- **Chen et al.** *J. Sci. Food Agric.,* 1984, vol. 35, 1128-1135
- **Shin et al.** *Cereal Chem.,* 1997, vol. 74, 437-441
- **Juliano B.O. et al.** STARCH; CHEMISTRY AND TECHNOLOGY. Academic Press, 1984, 507-528
- **Ju et al.** *J. Food Sci.,* 2001, vol. 66, 229-232
- **Morita et al.** *J. Food Sci.,* 1993, vol. 58, 1393-1406
- **Chang et al.** *J. Food Sci.,* 1993, vol. 51, 464-467
- **Helm et al.** *Cereal Foods World,* 1996, vol. 41, 839-843
- **Tecson et al.** *Cereal Chem.,* 1971, vol. 48, 91-202
- **Sambrook et al.** MOLECULAR CLONING: A LABORATORY MANUAL. 1989
- **Kreigler.** GENE TRANSFER AND EXPRESSION; A LABORATORY MANUAL. 1990
- CURRENT PROTOCOLS IN MOLECULAR BIOLOGY. 1994
- **Singleton et al.** DICTIONARY OF MICROBIOLOGY AND MOLECULAR BIOLOGY. John Wiley and Sons, 1994
- **Hale ; Markham.** THE HARPER COLLINS DICTIONARY OF BIOLOGY. Harper Perennial, 1991
- **Alexopoulos, C. J.** INTRODUCTORY MYCOLOGY. Wiley, 1962
- **Innis et al.** *Sci.,* 1985, vol. 228, 21-26
- **Houston et al.** *Cereal Chem.,* 1970, vol. 47, 5
- **Perdon et al.** *Phytochem.,* 1978, vol. 17, 351
- **Landers et al.** *Cereal Chem,* 1994, vol. 71, 409-41.1
- **Tosi et al.** *Can. J. Microbiol.,* 1993, vol. 39, 846-855
- **Kanlayakrit et al.** *J. Ferment. Technol.,* 1987, vol. 65, 379-385
- **Ashikari et al.** *Agric. Biol. Chem.,* 1986, vol. 50, 957-964
- **Allison et al.** *Curr. Genet.,* 1992, vol. 21, 225-229
- **Hayashida et al.** *Agric. Biol. Chem,* 1989, vol. 53, 923-929
- **Shibuya et al.** *Agric. Biol. Chem.,* 1990, vol. 54, 1905-1914
- **Hayashida et al.** *Agric. Biol. Chem.,* 1989, vol. 53, 923-929
- Current Protocols in Molecular Biology. 1987
- **Boel et al.** *EMBO J.,* 1984, vol. 3, 1097-1102
- **Chen et al.** *Prot. Eng.,* 1996, vol. 9, 499-505
- **Taylor et al.** *Carbohydrate Res.,* 1978, vol. 61, 301-308
- **Jensen et al.** *Can. J. Microbiol.,* 1988, vol. 34, 218-223
- **Ward et al.** *Appl. Microbiol. Biotechnol.,* 1993, vol. 39, 738-743

- **Goedegebuur et al.** *Curr. Gene,* 2002, vol. 41, 89-98
- **Sheir-Neiss et al.** *Appl. Microbiol. Biotechnol.,* 1984, vol. 20, 46-53
- **van den Hondel et al.** MORE GENE MANIPULATIONS IN FUNGI. Academic Press, 1991, 396-428
- **Nunberg et al.** *Mol. Cell Biol.,* 1984, vol. 4, 2306-2315
- **Boel et al.** *EMBO J.,* 1984, vol. 3, 1581-1585
- **Kelley et al.** *EMBO J.,* 1985, vol. 4, 475-479
- **Penttila et al.** *Gene,* 1987, vol. 61, 155-164
- **Bennett ; Lasure.** MORE GENE MANIPULATIONS IN FUNGI. Academic Press, 1991, 70-76
- **Campbell et al.** *Curr. Genet.,* 1989, vol. 16, 53-56
- **Harkki et al.** *Enzyme Microb. Technol.,* 1991, vol. 13, 227-233
- **Harkki et al.** *Bio Technol.,* 1989, vol. 7, 596-603
- The Molecular Biology of Trichoderma and its Application to the Expression of Both Homologous and Heterologous Genes. **Nevalainen et al.** MOLECULAR INDUSTRIAL MYCOLOGY. Marcel Dekker Inc, 1992, 129-148
- **Cao et al.** *Sci.,* 2000, vol. 9, 991-1001
- **Pourquie, J. et al.** BIOCHEMISTRY AND GENETICS OF CELLULOSE DEGRADATION. Academic Press, 1988, 71-86
- **Ilmen, M. et al.** *Appl. Environ. Microbiol.,* 1997, vol. 63, 1298-1306
- **Goto et al.** *Biosci. Biotechnol. Biochem.,* 1994, vol. 58, 49-54
- **Tilbeurgh et al.** *FEBS Lett.,* 1984, vol. 16, 215
- **Goyal et al.** *Biores. Technol.,* 1991, vol. 36, 37
- **Fliess et al.** *Eur. J. Appl. Microbiol. Biotechnol.,* 1983, vol. 17, 314
- **Bhikhabhai et al.** *J. Appl. Biochem.,* 1984, vol. 6, 336
- **Ellouz et al.** *Chromatography,* 1987, vol. 396, 307
- **Medve et al.** *J. Chromatography A,* 1998, vol. 808, 153
- **Tomaz ; Queiroz.** *J. Chromatography,* 1999, vol. A 865, 123
- **Brumbauer et al.** *Bioseparation,* 1999, vol. 7, 287
- **Foreman et al.** *J. Biol. Chem,* 2003, vol. 278, 31988-31997
- **Davis et al.** *Methods in Enzymology,* 1970, vol. 17A, 79-143
- **Davis ; Rowland.** Neurospora, Contributions of a Model Organism. Oxford University Press, 2000
- **Shih et al.** *JAOCS,* 2000, vol. 77, 885-889
- **Morita et al.** *J. Food Sci.,* 1993, vol. 58, 1393-1396